# EUROPÄISCHE PATENTSCHRIFT

(11) **EP 3 291 986 B1**
(45) Veröffentlichungstag und Bekanntmachung des Hinweises auf die Patenterteilung: **27.02.2019**
(21) Anmeldenummer: 16722585.3
(22) Anmeldetag: 03.05.2016
(51) Int. Cl.: B32B 27/08, B32B 27/40

(54) **VERFAHREN ZUR HERSTELLUNG VON VERBUNDMATERIALIEN**
METHOD FOR PRODUCING COMPOSITE MATERIALS
PROCÉDÉ DE PRODUCTION DE MATÉRIAUX COMPOSITES

(30) Priorität: 06.05.2015 EP 15166529
(43) Veröffentlichungstag der Anmeldung: 14.03.2018
(73) Patentinhaber: BASF SE, 67056 Ludwigshafen am Rhein (DE)
(72) Erfinder: PFEIFER, Detlef, 67098 Bad Duerkheim (DE); DREISSIGACKER, Georg, 76829 Landau (DE)
(74) Vertreter: BASF IP Association
(86) Internationale Anmeldenummer: PCT/EP2016/059806
(87) Internationale Veröffentlichungsnummer: WO 2016/177684

(56) Entgegenhaltungen:
- WO-A1-2012/072257
- US-A1- 2008 081 196

## Beschreibung

Die vorliegende Erfindung betrifft ein Verfahren zur Herstellung von mehrschichtigen Verbundsystemen. Weiterhin betrifft die vorliegende Erfindung die Verwendung von erfindungsgemäßen mehrschichtigen Verbundsystemen.

WO 2009/106496, WO 2009/106498, WO 2009/106499, WO 2009/106500, WO 2009/106503 beschreiben mehrschichtige Verbundmaterialien mit angenehmen optischen und haptischen Eigenschaften. Jedoch waren die Eigenschaften der dort beschriebenen Verbundmaterialien noch verbesserungswürdig.

Es bestand die Aufgabe, Prozesse bereit zu stellen, die die Herstellung von mehrschichtigen Verbundsystemen ermöglichen, die ein ansprechendes optisches Äußeres und eine angenehme Haptik aufweisen und die insbesondere gute Alterungs- und Lagereigenschaften aufweisen.

Dementsprechend wurden die Verfahren nach Anspruch 1 gefunden.

Das erfindungsgemäße Verfahren dient zur Herstellung von mehrschichtigen Verbundmaterialien enthaltend
(A) ein Trägermaterial
(B) gegebenenfalls mindestens eine Verbindungsschicht und
(C) eine Polyurethanschicht,
dadurch gekennzeichnet, dass man mit Hilfe einer Matrize eine Polymerschicht (C) bildet, gegebenenfalls mindestens einen organischen Klebstoff vollflächig oder partiell auf Trägermaterial (A) und/oder auf Polymerschicht (C) aufbringt und dann Polymerschicht (C) mit Trägermaterial (A) punktförmig, streifenartig oder flächig verbindet, wobei Polymerschicht (C) und/oder die gegebenenfalls mindestens eine Verbindungsschicht (B) aus wässrigen Polymerdispersionen hergestellt werden, die mindestens einen Vernetzer V enthalten, wobei der mindestens eine Vernetzer V mindestens ein Polyisocyanat P ist, dessen Isocyanatgruppen bei Raumtemperatur mit mindestens einem Blockierungsmittel BM blockiert sind.

Verfahren zur Herstellung von mehrschichtigen Verbundmaterialien umfassend als Komponenten:
(A) ein Trägermaterial
(B) gegebenenfalls mindestens eine Verbindungsschicht und
(C) eine Polymerschicht,
dadurch gekennzeichnet, dass man

Die vorliegende Erfindung betrifft ein Verfahren zur Herstellung von mehrschichtigen Verbundsystemen. Weiterhin betrifft die vorliegende Erfindung die Verwendung von erfindungsgemäßen mehrschichtigen Verbundsystemen.

WO 2009/106496, WO 2009/106498, WO 2009/106499, WO 2009/106500, WO 2009/106503 beschreiben mehrschichtige Verbundmaterialien mit angenehmen optischen und haptischen Eigenschaften. Jedoch waren die Eigenschaften der dort beschriebenen Verbundmaterialien noch verbesserungswürdig.

WO 2012/072257 offenbart mehrschichtige Verbundmaterialien mit einer polymeren Oberschicht enthaltend zwischen 2-12 Gew.-% Polysiloxan, die über zumindest eine Kleberschicht mit einer Trägerschicht, die zum überwiegenden Teil oder zur Gänze aus einem offenzelligen Polyurethanschaum gebildet ist, angebunden ist. Dabei dringt die Polyurethandispersion der Kleberschicht kontrolliert in die Trägerschicht ein, um eine bestimmte Dichte zu erzielen.

US2008081196 betrifft Metallbleche welche eine Beschichtung aufweist, die eine vernetzte Zusammensetzung (A) aus einem wasserbasierten Harz und einem optional blockierten Vernetzer sowie ein Rostschutzmittel (B) enthält, um eine umweltfreundlichere Alternative zur Chromatierung von Metallblechen bereitzustellen, die eine hohe Korrosionsbeständigkeit aufweist.

Es bestand die Aufgabe, Prozesse bereit zu stellen, die die Herstellung von mehrschichtigen Verbundsystemen ermöglichen, die ein ansprechendes optisches Äußeres und eine angenehme Haptik aufweisen und die insbesondere gute Alterungs- und Lagereigenschaften aufweisen.

Dementsprechend wurden die Verfahren nach Anspruch 1 gefunden.

Das erfindungsgemäße Verfahren dient zur Herstellung von mehrschichtigen Verbundmaterialien enthaltend
(A) ein Trägermaterial
(B) gegebenenfalls mindestens eine Verbindungsschicht und
(C) eine Polyurethanschicht,
dadurch gekennzeichnet, dass man mit Hilfe einer Matrize eine Polymerschicht (C) bildet, gegebenenfalls mindestens einen organischen Klebstoff vollflächig oder partiell auf Trägermaterial (A) und/oder auf Polymerschicht (C) aufbringt und dann Polymerschicht (C) mit Trägermaterial (A) punktförmig, streifenartig oder flächig verbindet, wobei Polymerschicht (C) und/oder die gegebenenfalls mindestens eine Verbindungsschicht (B) aus wässrigen Polymerdispersionen hergestellt werden, die mindestens einen Vernetzer V enthalten, wobei der mindestens eine Vernetzer V mindestens ein Polyisocyanat P ist, dessen Isocyanatgruppen bei Raumtemperatur mit mindestens einem Blockierungsmittel BM blockiert sind.

Verfahren zur Herstellung von mehrschichtigen Verbundmaterialien umfassend als Komponenten:
(A) ein Trägermaterial
(B) gegebenenfalls mindestens eine Verbindungsschicht und
(C) eine Polymerschicht,
dadurch gekennzeichnet, dass man
a) mit Hilfe einer Matrize eine Polymerschicht (C) bildet,
b) gegebenenfalls mindestens einen organischen Klebstoff vollflächig oder partiell auf Trägermaterial (A) und/oder auf Polymerschicht (C) aufbringt und dann
c) Polymerschicht (C) mit Trägermaterial (A) punktförmig, streifenartig oder flächig verbindet,
wobei Polymerschicht (C) und/oder die gegebenenfalls mindestens eine Verbindungsschicht (B) aus wässrigen Polymerdispersionen hergestellt werden, die mindestens einen Vernetzer V enthalten, wobei der mindestens eine Vernetzer V mindestens ein Polyisocyanat P ist, dessen Isocyanatgruppen bei Raumtemperatur mit mindestens einem Blockierungsmittel BM blockiert sind.

Verfahren zur Herstellung von mehrschichtigen Verbundmaterialien umfassend als Komponenten:
(A) ein Trägermaterial
(B) gegebenenfalls mindestens eine Verbindungsschicht und
(C) eine Polymerschicht,
dadurch gekennzeichnet, dass man
a) mit Hilfe einer Matrize eine Polymerschicht (C) bildet,
b) gegebenenfalls mindestens einen organischen Klebstoff vollflächig oder partiell auf Trägermaterial (A) und/oder auf Polymerschicht (C) aufbringt und dann
c) Polymerschicht (C) mit Trägermaterial (A) punktförmig, streifenartig oder flächig verbindet,
wobei Polymerschicht (C) und/oder die gegebenenfalls mindestens eine Verbindungsschicht (B) aus wässrigen Polymerdispersionen hergestellt werden, die mindestens einen Vernetzer V enthalten, wobei der mindestens eine Vernetzer V mindestens ein Polyisocyanat P ist, das mit mindestens einem Blockierungsmittel BM blockiert ist, wobei das mindestens eine Blockierungsmittel BM ausgewählt ist aus Malonsäureestern, Acetoacetaten, Oximen, Pyrazolen, Lactamen und Phenolen.

Erfindungsgemäße Verfahren verwenden als Trägermaterial (A) in der Regel ein flächiges Substrat. Flächige Substrate sind im Rahmen der vorliegenden Erfindung solche, deren Ausdehnung in zwei Dimensionen viel größer ist als in der dritten, beispielsweise können Breite und Länge von flächigem Substrat (A) die Dicke jeweils um mindestens den Faktor 100 übertreffen, bevorzugt um mindestens den Faktor 1000.

In einer Ausführungsform übertreffen Länge und/oder Breite von flächigem Substrat (A) die Dicke um einen Faktor von bis zu 1.000.000.

Länge und Breite von flächigem Substrat (A) können jeweils gleich oder vorzugsweise verschieden sein. Beispielsweise kann die Länge von flächigem Substrat (A) die Breite um den Faktor 1,1 bis zu 100 übertreffen.

In einer Ausführungsform der vorliegenden Erfindung liegt die Länge von flächigem Substrat (A) im Bereich von 50 cm bis 100 m, bevorzugt bis zu 50 m, besonders bevorzugt bis zu 10 m.

In einer Ausführungsform der vorliegenden Erfindung liegt die Breite von flächigem Substrat (A) im Bereich von 10 cm bis 5 m, bevorzugt bis zu 2 m.

In einer Ausführungsform der vorliegenden Erfindung liegt die Dicke von flächigem Substrat (A) im Bereich von 50 nm bis 2 mm, bevorzugt 100 µm bis zu 500 µm.

In einer Ausführungsform handelt es sich bei flächigem Substrat (A) um ein "endlosMaterial", das in der Regel aufgerollt eingesetzt wird und in einem kontinuierlichen Verfahren verwendet wird. Hierbei übertrifft die Länge des aufgerollten flächigen Materials (A) dessen Breite um ein Vielfaches.

Flächiges Substrat (A) kann aus einem oder mehreren Materialien bestehen. Vorzugsweise wählt man flächiges Substrat (A) aus Leder, Textilien, Kunstleder, Schaumstoffen, cellulosehaltige Materialien, Stein, Metallfolien, Kunststofffolien, Geweben, Vliesen, und Verbundfolien, wie metallisierten Kunststofffolien. Beispiele für bevorzugte Gewebe oder Vliese sind Gewebe oder Vliese aus Polyester und Vliese aus thermoplastischem Polyurethan ("TPU"). Beispiele für bevorzugte Kunststofffolien sind PVC-Folien, Polyethylenfolien, Polypropylenfolien, Folien aus Polystyrol, Polyamid oder Polyester, insbesondere Polyethylenterephthalat ("PET"). Beispiele für besonders bevorzugte Metallfolien sind solche aus Aluminium.

In einer anderen Ausführungsform der vorliegenden Erfindung wählt man flächiges Substrat aus Recyclat, beispielsweise aus recycliertem Kunststoff.

In einer Ausführungsform der vorliegenden Erfindung weist flächiges Substrat (A) einen E-Modul im Bereich von 200 bis 5000 N/mm² auf, bestimmbar beispielsweise nach DIN 53455. Geeignet sind insbesondere flächige Substrate mit einem E-Modul im Bereich von 200 bis 1000 N/mm², die beispielsweise überwiegend Polyethylen (HDPE oder LDPE) enthalten, im Bereich von 1000 bis 3500 N/mm², die beispielsweise überwiegend Hart-PVC enthalten, oder im Bereich von 4000 bis 4500 N/mm², die überwiegend PET enthalten.

In einer Ausführungsform der vorliegenden Erfindung wählt man flächiges Substrat aus Kunststofffolien aus additiviertem Kunststoff. Geeignete Additive können beispielsweise gewählt sein aus Weichmachern, Schlagzähmodifiern, Stabilisatoren, Farbmitteln, Füllstoffen, Verstärkungsstoffen und Wachsen.

Bevorzugte Trägermaterialien (A) sind Leder oder Textilien, insbesondere Textilien, sowie Kunstleder. Textile Flächengebilde (A), die im Rahmen der vorliegenden Erfindung auch Textil (A) oder Textilien (A) genannt werden, können verschiedene Erscheinungsformen aufweisen. Geeignet sind beispielsweise Gewebe, Filz, Gestricke (Strickwaren), Gewirke, Watten, Gelege, Non-Woven und Mikrofasergewebe.

In einer Ausführungsform sind Textilien (A) unbeschichtet. In einer anderen Ausführungsform sind Textilien (A) zum Beispiel mit PU / TPU / PVC (wasserbasierend oder lösemittelhaltig) beschichtet.

Vorzugsweise handelt es sich bei Textil (A) um Gewebe, Gewirke, Non-woven oder Gestricke.

Textile Flächengebilde (A) können hergestellt sein aus Leinen, Schnüren, Seilen, Garnen oder Zwirnen. Textilien (A) können natürlichen Ursprungs sein, beispielsweise Baumwolle, Wolle oder Flachs, oder synthetisch, beispielsweise Polyamid, Polyester, modifizierte Polyester, Polyestermischgewebe, Polyamidmischgewebe, Polyacrylnitril, Triacetat, Acetat, Polycarbonat, Polyolefine wie beispielsweise Polyethylen und Polypropylen, Polyvinylchlorid, weiterhin Polyestermikrofasern und Glasfasergewebe. Ganz besonders bevorzugt sind Polyester, Baumwolle und Polyolefine wie beispielsweise Polyethylen und Polypropylen sowie ausgewählte Mischgewebe, gewählt aus Baumwolle-Polyester-Mischgewebe, Polyolefin-Polyester-Mischgewebe und Polyolefin-Baumwolle-Mischgewebe.

Textile Flächengebilde (A) können unbehandelt sein oder behandelt, beispielsweise gebleicht, gefärbt und ausgerüstet. Vorzugsweise sind textile Flächengebilde unbeschichtet oder auf nur einer Seite beschichtet.

In einer speziellen Ausführungsform der vorliegenden Erfindung handelt es sich bei textilem Flächengebilde (A) um Gewebe, Gestricke oder vorzugsweise Non-wovens, bei denen durch Koagulation mindestens ein Polymer, beispielsweise Polyamid oder insbesondere Polyurethan, abgeschieden wurde, aber vorzugsweise so, dass das betreffende textile Flächengebilde seine Atmungsaktivität oder Luftdurchlässigkeit behält. Polymere kann man beispielsweise in der Art durch Koagulation abscheiden, dass man zunächst eine Lösung eines Polymers in einem so genannten guten Lösemittel bereitstellt, für Polyurethane sind beispielsweise N,N-Dimethylformamid (DMF), Tetrahydrofuran (THF) und N,N-Dimethylacetamid (DMA) geeignet. Aus dieser Lösung wird zunächst ein poröser Film des betreffenden Polymers abgeschieden, beispielsweise indem man die Lösung den Dämpfen eines so genannten schlechten Lösemittels aussetzt, welches das betreffende Polymer weder lösen noch quellen kann. Für viele Polymere sind Wasser und Methanol geeignete schlechte Lösemittel, wobei Wasser bevorzugt ist. Wünscht man Wasser als schlechtes Lösemittel einzusetzen, so kann man die Lösung beispielsweise einer feuchten Atmosphäre aussetzen. Der so erhältliche poröse Film wird abgetrennt und auf das betreffende textile Flächengebilde überführt. Vor oder nach dieser Überführung wird der Rest des guten Lösemittels abgetrennt, beispielsweise durch Auswaschen mit einem schlechten Lösemittel.

In einer ganz speziellen Ausführungsform der vorliegenden Erfindung handelt es sich bei dem Material um ein Poromeres, bei dem in wie oben beschriebenen abgeschiedenen Polymer Porositäten erzeugt werden z. B. durch Auswaschen von Salzen oder nach anderen Methoden, wie sie z.B. in Kapitel 6ff. des Buches New Materials Permeable to Water Vapor, Harro Träubel, Springer Verlag 1999, beschrieben sind.

Textile Flächengebilde (A) können ausgerüstet sein, insbesondere sind sie Pflegeleicht, flammfest, Wasser- und/oder Ölabweisend ausgerüstet.

Textile Flächengebilde (A) können ein Flächengewicht im Bereich von 10 bis 3000 g/m² aufweisen, bevorzugt sind 50 bis 300 g/m².

In einer Ausführungsform der Erfindung handelt es sich bei Trägermaterial (A) um Verbundmaterialien eines Textils mit einer Membranfolie M. Membranfolien M können zum Beispiel im Wesentlichen aus Polycarbonat, Polyester, Polyurethan, Polytetrafluorethylen oder Mischungen davon bestehen. Bevorzugte Membranfolien M weisen eine hohe Durchlässigkeit für Wasserdampf (Wasserdampfdurchlässigkeit - MVTR Moisture Vapor Transmission Rate - von größer als 800 g/m²24h gemäß DIN 53122) auf aber nur eine geringe Durchlässigkeit für flüssiges Wasser (Wassersäule > 50 mbar gemäß DIN 20811). Geeignete Membranfolien M sind zum Beispiel erhältlich unter den Handelsnamen GoreTex ®, Sympatex® ,Bayfol®, Dureflex®, Makrofol®, Platilon®, porelle®, PROCHIMIR®, Advanta™, Provecta™, Orkesta™, Texiron®.

Erfindungsgemäßes mehrschichtiges Verbundsystem kann weiterhin mindestens eine Verbindungsschicht (B) aufweisen, die vollflächig oder partiell ausgebildet sein kann.

Bei Verbindungsschicht (B) kann es sich beispielsweise um eine durchbrochene, das heißt nicht vollflächig, ausgeprägte Schicht handeln, vorzugsweise eines gehärteten organischen Klebstoffs.

Geeignete organische Klebstoffe können zum Beispiel auf der Basis von Polyurethanen, Polyamiden, Polyestern, Polyethylen, EVA (Ethylen-Vinylacetat) sein. In einer Ausführungsform handelt es sich bei organischen Klebstoffen um Schmelzklebstoffe (Hotmelts).

In einer Ausführungsform der vorliegenden Erfindung handelt es sich bei Verbindungsschicht (B) um eine punktförmig, streifenförmig oder gitterförmig, beispielsweise in Form von Rauten, Rechtecken, Quadraten oder einer Bienenwabenstruktur aufgebrachte Schicht. Dann kommt Polymerschicht (C) mit flächigem Substrat (A) an den Lücken der Verbindungsschicht (B) in Berührung.

In einer Ausführungsform der vorliegenden Erfindung handelt es sich bei Verbindungsschicht (B) um eine Schicht eines gehärteten organischen Klebstoffs, beispielsweise auf Basis von Polyvinylacetat, Polyacrylat oder insbesondere Polyurethan, vorzugsweise von Polyurethanen mit einer Glastemperatur unter 0°C, bestimmt beispielsweise durch DSC (Differentialthermoanalyse, Differential Scanning Calorimetry) nach DIN 53765.

Dabei kann die Härtung des organischen Klebstoffs beispielsweise thermisch, durch aktinische Strahlung oder durch Altern erfolgt sein.

In einer anderen Ausführungsform der vorliegenden Erfindung handelt es sich bei Verbindungsschicht (B) um ein Klebenetz. In einer Ausführungsform wird die Verbindungsschicht (B) durch Heißkleber (Hotmelts) auf Basis z.B. PU, PA, PES, PE oder EVA hergestellt.

Je nach den verwendeten Kleber und Trägermaterialien kann die Verbindungsschicht (B) zum Beispiel durch Streuen, Breitschlitzdüse, Extrusion, Screen, Gravurwalze appliziert werden.

In eine bevorzugte Ausführungsform wird Verbindungsschicht (B) durch Sprühapplikation erzeugt.

In einer Ausführungsform der vorliegenden Erfindung weist Verbindungsschicht (B) eine Dicke im Bereich von einem bis maximal 100 µm, bevorzugt bis 50 µm, besonders bevorzugt bis 15 µm auf.

In einer anderen Ausführungsform der vorliegenden Erfindung enthält erfindungsgemäßes Verbundsystem keine Verbindungsschicht (B).

In einer Ausführungsform der vorliegenden Erfindung kann Verbindungsschicht (B), wie auch Schicht (C), optional ein oder mehrere Additive enthalten, beispielsweise ein oder mehrere Flammschutzmittel, Stabilisatoren wie Oxidationsschutzmittel, Lichtschutzmittel und/oder Hydrophobierungs- oder Oleophobierungsmittel.

Geeignete Flammschutzmittel sind zum Beispiel anorganische Flammschutzmittel, halogenierte organische Verbindungen, organische Phosphorverbindungen oder halogenierte organische Phosphorverbindungen.

Geeignete anorganische Flammschutzmittel sind zum Beispiel Phosphate wie Ammoniumphosphate, Aluminiumhydroxide, Aluminiumoxidhydrate, Zinkborate, Antimonoxid.

Geeignete halogenierte organische Verbindungen sind zum Beispiel Chlorparaffine, polychlorierte Biphenyle, Hexabrombenzol, polybromierte Diphenylether (PBDE) und andere Brom-Verbindungen, Additionsprodukte des Hexachlorcyclopentadiens, z. B. mit Cyclooctadien, Tetrabrombisphenol A , Tetrabromphthalsäureanhydrid, Dibromneopentylglycol.

Geeignete organische Phosphorverbindungen sind zum Beispiel organische Phosphate, Phosphite und Phosphonate, wie zum Beispiel Trikresylphosphat und *tert-*Butylphenyldiphenylphosphat.

Geeignete halogenierte organische Phosphorverbindungen sind zum Beispiel Tris(2,3-dibrompropyl)phosphat, Tris(2-brom-4-methylphenyl)phosphat und Tris(2-chlorisopropyl) phosphat.

Bevorzugte Flammschutzmittel sind zum Beispiel Polyvinylchloride oder Polyvinylidenchloride wie Copolymere aus Vinylidenchlorid mit (Meth)Acrylsäureestern. Derartige Produkte werden zum Beispiel unter dem Handelsnamen Diofan® vertrieben.

Geeignete Lichtschutzmittel sind zum Beispiel Radikalfänger wie sterisch gehinderte organische Amine (HALS), Peroxidzersetzer wie zum Beispiel Benzotriazole wie 2-(2-Hydroxyphenyl)-2H-benzotriazole (BTZ) oder Hydroxybenzophenone (BP). Weitere geeignete Lichtschutzmittel sind zum Beispiel (2-Hydroxyphenyl)-s-triazine (HPT), Oxalanilide oder nicht-pigmentäres Titandioxid.

Geeignete Lichtschutzmittel sind zum Beispiel unter dem Handelsnamen Irganox®, Irgastab® oder Tinuvin® erhältlich.

Bevorzugte Lichtschutzmittel sind HALS Verbindungen.

In einer bevorzugten Ausführungsform wird die mindestens eine Verbindungsschicht (B) aus einer wässrigen Dispersion eines organischen Klebstoffs gebildet, bevorzugt aus einer Polymer-/Polyurethandispersion, die mindestens einen Vernetzer V enthält.

Bevorzugt enthält die Verbindungsschicht (B) mindestens einen organischen Klebstoff auf der Basis mindestens eines Polyurethans.

In einer besonders bevorzugten Ausführungsform der Erfindung enthalten wässrige Polymer-/Polyurethandispersionen zur Herstellung von Verbindungsschichten (B) mindestens einen Vernetzer V, wobei der mindestens eine Vernetzer V mindestens ein Polyisocyanat P ist, dessen Isocyanatgruppen bei Raumtemperatur mit mindestens einem Blockierungsmittel BM blockiert ist.

Erfindungsgemäß enthält Vernetzer V bei Raumtemperatur keine freien Isocyanatgruppen.

Bevorzugte Vernetzer V, die auch als Härter bezeichnet werden können, sind zum Beispiel Polyisocyanate P, insbesondere aliphatische Polyisocyanate P, wie zum Beispiel Isocyanurate, Biurete, Allophanate oder Uretdione auf der Basis von Hexamethylendiisocyanat und/oder Isophorondiisocyanat. Bevorzugte Polyisocyanate P sind Isocyanurate und/oder Allophanate von Hexamethylendiisoyanat. Insbesondere bevorzugt sind Isocyanurate von Hexamethylendiisocyanat.

In einer Ausführungsform enthalten bevorzugte Polyisocyanate P eine hydrophile Gruppe, durch die die Polyisocyanate P in wässrigen Systemen leichter dispergierbar werden.

Besonders bevorzugte Polyisocyanate P enthalten eine hydrophile Gruppe die entweder anionisch ist oder mindestens eine Polyethergruppe die zumindest teilweise aus Ethylenoxid aufgebaut ist.

In einer Ausführungsform werden der wässrigen Polyurethandispersion geeignete Vernetzer V als 1 bis 80 Gew%ige Lösung in Dipropylenglycoldimethylether und/oder 1,2-Propandiol-diacetat zugegeben, bevorzugt als 30 bis 75 Gew%ige Lösung in Dipropylenglycoldimethylether und/oder 1,2-Propandiol-diacetat.

Geeignete Blockierungsmittel BM sind zum Beispiel Malonsäureester wie Malonsäurediethylester, Acetoacetate wie Methylacetoacetat, Pyrazole wie 3,5-Dimethylpyrazol, Lactame wie Caprolactam oder N-Methylpyrrolidon, Phenole wie Phenol.

Oxime wie Butanonoxim sind als Blockierungsmittel denkbar, jedoch weniger bevorzugt.

In einer besonders bevorzugten Ausführungsform werden den wässrigen Polymer/Polyurethandispersionen Polyisocyanat-Vernetzer V als 30 bis 75 Gew%ige Lösung in Dipropylenglycoldimethylether und/oder 1,2-Propandiol-diacetat zugegeben.

Verbundsysteme, die nach dem erfindungsgemäßen Verfahren hergestellt worden sind, enthalten eine Polymerschicht (C), die in der Regel Kapillaren aufweist, die über die gesamte Dicke der Polymerschicht (C) gehen. Das heißt, Polymerschicht (C) weist durchgängige Kapillaren auf.

Geeignete Polymere sind alle thermoplastischen Polymere, die sich in Form bevorzugt wässriger Dispersionen bereitstellen lassen. Bevorzugt haben sie eine Glastemperatur kleiner als 0°C, bestimmt beispielsweise durch DSC (Differentialthermoanalyse, Differential Scanning Calorimetry) nach DIN 53765. Polymerschicht (C) ist unterschiedlich von der gegebenenfalls mindestens einen Verbindungsschicht (B).

Polymerschicht (C) kann zum Beispiel im Wesentlichen aus folgenden Polymeren bestehen: Polyacrylat, Epoxidharze, Polyvinylacetat, Polyvinylchlorid, Polyvinylidenchlorid, Polyacrylnitril, Polystyrol, Polybutadien, Polyurethan oder Mischungen hiervon. Bevorzugt besteht Polymerschicht (C) im Wesentlichen aus Polyurethan.

Als Polystyrol verstanden seien im Rahmen dieser Erfindung unter anderem alle Homo- oder Copolymere, die durch Polymerisation von Styrol und / oder Derivaten des Styrols entstehen. Derivate des Styrols sind zum Beispiel Alkylstyrole wie alpha-Methylstyrol, ortho-, meta-, para-Methylstyrol, para-Butylstyrol insbesondere para-tert-Butylstyrol, Alkoxystyrole wie para-Methoxystyrol, para-Butoxystyrol, para-tert-Butoxystyrol.

In der Regel haben geeignete Polystyrole eine mittlere molare Masse Mₙ von 5.000 bis 1.000.000 g/mol (bestimmt durch GPC) bevorzugt 20.000 bis 750.000 g/mol, besonders bevorzugt 30.000 bis 500.000 g/mol.

In einer bevorzugten Ausführungsform besteht die Matrix des Farbkonverters im Wesentlichen oder vollständig aus einem Homopolymer von Styrol oder Styrolderivaten.

In weiteren bevorzugten Ausführungsformen der Erfindung besteht die Matrix im Wesentlichen oder vollständig aus einem Styrol-Copolymer, die im Rahmen dieser Anmeldung ebenfalls als Polystyrol angesehen wird. Styrol Copolymere können als weitere Bestandteile zum Beispiel Butadien, Acrylnitril, Maleinsäureanhydrid, Vinylcarbazol oder Ester der Acryl-, Methacryl- oder Itaconsäure als Monomere enthalten. Geeignete Styrolcopolymere enthalten in der Regel mindestens 20 Gew% Styrol bevorzugt mindestens 40 und besonders bevorzugt mindestens 60 Gew% Styrol. In einer anderen Ausführungsform enthalten sie mindestens 90 Gew% Styrol.

Bevorzugte Styrol Copolymere sind Styrol Acrylnitril Copolymere (SAN) und Acrylnitril-Butadien-Styrol Copolymere (ABS), Styrol - 1,1'-Diphenylethen Copolymere, Acrylester-Styrol-Acrylnitril Copolymere (ASA), Styrol Butadien Copolymere (wie SB Dispersionen), Methylmethacrylat-Acrylnitril-Butadien-Styrol Copolymere (MABS). Ein weiteres bevorzugtes Polymer ist alpha-Methylstyrol - Acrylnitril Copolymer (AMSAN).

Die Styrol Homo- oder Copolymere können zum Beispiel durch radikalische Polymerisation, kationische Polymerisation, anionische Polymerisation oder unter dem Einfluss metallorganischer Katalysatoren (zum Beispiel Ziegler-Natta Katalyse) hergestellt werden. Dies kann zu isotaktischem, syndiotaktischem, ataktischen Polystyrol bzw. Copolymeren führen. Bevorzugt werden sie durch radikalische Polymerisation hergestellt. Die Polymerisation kann als Suspensionspolymerisation, Emulsionspolymerisation, Lösungspolymerisation oder Massepolymerisation durchgeführt werden.

Geeignete Polyacrylate haben in der Regel ein Molekulargewicht von 5.000 bis 1.000.000 g/Mol.

Geeignete Polyacrylate kann man vorzugsweise durch radikalische (Co)polymerisation der entsprechenden Comonomeren herstellen, bevorzugt durch radikalische Emulsionscopolymerisation, die im Rahmen der vorliegenden Erfindung auch vereinfachend als radikalische Emulsionspolymerisation bezeichnet wird. Möglich ist auch die Herstellung von Polyacrylat-Dispersionen durch Lösungscopolymerisation.

Diese ist beispielsweise bekannt aus US-A 5 221 284, US-A 5 376 459.

Besonders bevorzugt sind Polyacrylate, die aus wenigstens einem der folgenden Monomeren durch radikalische Copolymerisation erhältlich sind.
1) Acrylsäure und Methacrylsäure und deren Derivate der Formel CH₂=CR¹-CO-OR², wobei R¹ für Wasserstoff oder Methyl steht und R² für einen Kohlenwasserstoffrest mit 1 bis 40 C-Atomen steht, der auch durch Fluor, Hydroxy, C₁₋₄-Alkylamino, C₁₋₄-Alkoxy, Carbonyl-Gruppen sowie Polyethergruppen substituiert sein kann, bevorzugt hat R² 1 bis 10 C-Atome, besonders bevorzugt ist R² Methyl, Ethyl, Propyl, Isopropyl, Butyl, tert-Butyl, Hexyl, Ethylhexyl;
2) Acrylsäureamid, Methacrylamid und deren Derivate,
3) Styrol und substituierte Styrole wie alpha-Methylstyrol,
4) Acrylnitril,
5) Vinylester wie Vinylacetat, Vinylpropionat und/oder
6) Ungesättigte Dicarbonsäuren wie Crotonsäure, Itaconsäure oder Maleinsäureanhydrid.
7) Olefine wie Ethylen.

In einer bevorzugten Ausführungsform enthalten geeignete Polyacrylate keine Comonomere einpolymerisiert, die bei Einwirkung von Temperaturen im Bereich von 100 bis 250°C Formaldehyd abspalten können wie zum Beispiel N-Methylol(meth)acrylamid.

In einer anderen Ausführungsform enthalten geeignete Polyacrylate Comonomere einpolymerisiert, die bei Einwirkung von Temperaturen im Bereich von 100 bis 250°C Formaldehyd abspalten können wie zum Beispiel N-Methylol(meth)acrylamid.

Geeignete Polyacrylate werden vorzugsweise durch radikalische Copolymerisation von mindestens zwei Comonomeren erhalten, von denen mindestens eines gewählt wird aus (Meth)acrylsäure und (Meth)acrylaten, beispielsweise (Meth)acrylsäure-C₁-C₂₀-alkylestern, bevorzugt (Meth)acrylsäure-C₁-C₁₀-alkylestern, und die vorzugsweise mindestens 50 Gew.-% von Polymerschicht (C) ausmachen.

In einer Ausführungsform der vorliegenden Erfindung sind geeignete Polyacrylate gewählt aus Copolymeren, die als Comonomer (Meth)acrylsäure, Comonomer mit einer Epoxid-gruppe im Molekül wie beispielsweise Glycidyl(meth)acrylat, ω-C₂-C₁₀-Hydroxyalkyl(meth)acrylat oder (Meth)acrylsäureester von Alkoholen der allgemeinen Formel I 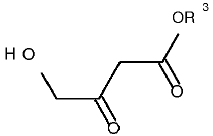 einpolymerisiert enthalten, wobei
- R³: gewählt wird aus verzweigtem und vorzugsweise unverzweigtem C₁-C₁₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl, besonders bevorzugt unverzweigtes C₁-C₄-Alkyl wie Methyl, Ethyl, n-Propyl und n-Butyl.

Als Poly(meth)acrylate im Sinne der vorliegenden Erfindung seien weiterhin Copolymere von einem oder mehreren C₁-C₁₀-Alkylestern von (Meth)acrylsäure genannt, die beispielsweise (Meth)acrylsäure, Glycidyl(meth)acrylat oder C₂-C₁₀-Hydroxyalkyl(meth)-acrylat und gegebenenfalls ein oder mehrere weitere Comonomere einpolymerisiert enthalten können. Als weitere Comonomere seien beispielhaft Vinylaromaten wie α-Methylstyrol, para-Methylstyrol und insbesondere Styrol, weiterhin (Meth)acrylamid, Vinylchlorid, (Meth)acrylnitril genannt.

Beispiele für besonders geeignete C₁-C₁₀-Alkylester von (Meth)acrylsäure sind Methyl(meth)acrylat, Ethyl(meth)acrylat, n-Propyl(meth)acrylat, Isopropyl(meth)acrylat, n-Butyl(meth)acrylat, n-Hexyl-(meth)acrylat, 2-Ethylhexyl(meth)acrylat, n-Decyl(meth)-acrylat.

Beispiele für besonders geeignete ω-Hydroxy-C₂-C₁₀-alkylenester von (Meth)acrylsäure sind insbesondere ω-Hydroxy-C₂-C₁₀-alkyl(meth)acrylate wie 6-Hydroxyhexyl-(meth)acrylat, 4-Hydroxybutyl(meth)acrylat, 3-Hydroxypropyl(meth)acrylat und insbesondere 2-Hydroxyethyl(meth)acrylat.

In einer bevorzugten Variante werden geeignete Polyacrylate aus solchen Poly(meth)-acrylaten gewählt, die Copolymere von einem oder mehreren C₁-C₁₀-Alkylestern von (Meth)acrylsäure und (Meth)acrylsäure und mindestens ein Comonomer, gewählt aus Glycidyl-(meth)acrylat und C₂-C₁₀-Hydroxyalkyl(meth)-acrylat einpolymerisiert enthalten, dazu gegebenenfalls ein oder mehrere weitere Comonomere.

Werden Polyacrylate eingesetzt, die (Meth)acrylsäure einpolymerisiert enthalten, so können die Carboxylgruppen der einpolymerisierten (Meth)acrylsäure in freier Form oder in vollständig oder partiell neutralisierter Form vorliegen, beispielsweise in mit Alkali, mit Ammoniak oder mit Amin vollständig oder partiell neutralisierter Form. Besonders geeignete Amine sind beispielsweise tertiäre Amine, z.B. (C₁-C₄-Alkyl)₃N, insbesondere Triethylamin, und Alkanolamine wie beispielsweise Ethanolamin, Diethanolamin, Triethanolamin, N-Methyl-ethanolamin, N,N-Dimethylethanolamin und N-(n-Butyl)ethanolamin.

Geeignete Polybutadiene sind in der Regel Copolymere aus Butadien mit Acrylnitril und/oder Styrol und/oder (Meth)Acrylsäureestern und/oder gegebenenfalls anderen ungesättigten Monomeren. Geeignete Polybutadiendispersionen können bei der Applikation mit Metalloxiden wie Zinkoxid vernetzt werden.

Geeignete Polyvinylidenchloride sind in der Regel Copolymere aus Vinylidenchlorid mit (Meth)Acrylsäureestern. Derartige Produkte werden zum Beispiel unter dem Handelsnamen Diofan® vertrieben.

Geeignete Polyvinylchloride (PVC) werden bevorzugt durch Homopolymerisation von Vinylchlorid erhalten. In einer anderen Ausführungsform werden geeignete Polyvinylchloride durch Copolymerisation von Vinylchlorid mit anderen Monomeren erhalten. Geeignete Polyvinylchloride können zum Beispiel durch Emulsionspolymerisation oder Suspensionspolymerisation erhalten werden.

Geeignete Polyvinylchloriddispersionen sind zum Beispiel unter den Handelsnamen SolVin® oder Diofan® kommerziell erhältlich.

Epoxidharze werden entweder durch katalytische Polymerisation von Epoxiden (Oxiranen) oder durch Umsetzung von Epoxiden, zum Beispiel Epichlorhydrin mit Diolen, zum Beispiel mit Bisphenolen wie Bisphenol A oder Bisphenol F dargestellt.

Geeignete Epoxidharze können zum Beispiel flüssige oder feste Harze auf Basis Bisphenol A oder F sein. Geeignete flüssige Epoxidharze, wie Bisphenol·A-diglycidylether, besitzen typischerweise ein Molekulargewicht von 200 bis 1000 g/mol, bevorzugt 300 bis 500 g/mol, besonders bevorzugt ca. 380 g/mol. Geeignete Epoxyharze sind häufig bifunktional. Eine molare Masse von 380 g/mol entspricht dann einem Epoxy·Equivalent·Weight (EEW) von 190 g/mol. In wässrigen Systemen können die preisgünstigen, wasserunlöslichen, flüssigen Harze ohne weitere Zusätze verwendet werden. In diesen Fällen wirkt der verwendete Härter als Emulgator.

Geeignete hydrophobe Festharze haben häufig ein Molekulargewicht von 500 bis 5000 g/mol, bevorzugt 700 bis 3000, besonders bevorzugt 900 bis 2000 g/mol und besonders bevorzugt 1000 bis 1500 g/mol. Sie sind in unbehandelter Form nicht mit wasserbasierten Systemen verträglich. Unter Zuhilfenahme reaktiver, nichtionischer Emulgatoren können Dispersionen solcher Harze hergestellt werden. Stabile Emulsionen haben in der Regel einen mittleren Partikeldurchmesser von kleiner als einem Mikrometer.

Die weniger bevorzugten lösemittelbasierten 2 Komponenten-Epoxidharze auf Basis von Bisphenol-A-diglycidylethern können zum Beispiel mit Aminen und Aminderivaten oder Mercaptanen gehärtet werden. Die hierfür eingesetzten Aminhärter können zum Beispiel cycloaliphatische, niedermolekulare Amine wie meta-Xylendiamin (MXDA), Isophorondiamin (IPDA), Diethylentriamin (DETA), Triethylentetraamin (TETA), polymere Polyaminoamide oder wasserlösliche, emulgierende, aminhaltige Polymere sein.

Geeignete wässrige 2K-Epoxidharzsysteme können zum Beispiel dadurch erhalten werden, dass man flüssige Epoxidharze durch geeignete oberflächenaktive Verbindungen emulgiert und Härter wie zum Beispiel Polyamidoaminhärter durch Zusatz von Emulgatoren und Protonierung dahingehend modifiziert, dass diese wasserlöslich wurden.

Wässrige Härter können im molekularen Aufbau aus einem ausgewogenen Verhältnis von Hydrophob- und Hydrophilelementen bestehen, die eine Selbstemulgierung von Flüssigharzen erlauben. Als ein Reaktant und späteres Vernetzungszentrum können hierfür die oben genannten Amine eingesetzt werden, die je nach Struktur eher hydrophil (z.B. TETA) oder hydrophob (z.B. IPDA) sind. Typische Hydrophilieelemente einer Härterstruktur sind zum Beispiel nichtionische Polyethylen/propylenglykol-Elemente unterschiedlichen Molekulargewichts, als Hydrophobkomponente werden häufig Bisphenol-A-diglycidylether Verbindungen eingesetzt. Durch einen sorgfältigen Aufbau der Molekularstruktur aus diesen oder ähnlichen Bausteinen können Härter mit den verschiedensten, Eigenschaften hergestellt werden. Typische selbstemulgierende Epoxidhärter sind beispielsweise unter den Handelsnamen WEX, Waterpoxy® von der Firma BASF erhältlich.

Im Bereich der wässrigen Epoxidharzsysteme sind insbesondere zwei unterschiedliche Systeme geeignet, die auch als Type I- und Type II-Systeme bezeichnet werden. Type I-Systeme basieren auf Flüssigharzsystemen mit einem EEW < 250. Type II -Systeme basieren auf Festharzemulsionen mit einem EEW > 250.

In Type I-Systemen agiert der eingesetzte Härter neben seiner Funktion als Härter auch als Emulgator für das Flüssigharz. Hieraus resultiert, dass in solchen Systemen schon kurz nach dem Mischen von Harz und Härter die Emulsionspartikel sowohl Harz als auch Härter enthalten. Daneben kann auch ein gewisser Anteil des Härters in der wässrigen Phase enthalten sein. Die räumliche Nähe von Harz und Härter im gleichen Emulsionspartikel führt meist zu einer schnellen Härtung mit entsprechend kurzer Topfzeit (< 3 h). Ein Vorteil von Type I- Systemen ist, dass sie oft vollständig VOC-frei formuliert werden können. Aufgrund der kurzen Abstände der Vernetzungspunkte und des rigiden Polymerrückgrates haben die ausgehärteten Filme eine hohe Härte bei einer oft niedrigen Flexibilität und hoher Chemikalienbeständigkeit.

Type II-Systeme basieren typischerweise auf Festharzemulsionen mit einem EEW > 250 und einem Festkörpergehalt von 45-62 %. Da das Festharz bereits als Emulsion vorliegt, ist der Einsatz von selbstemulgierenden Härtern wie in Typ I-Systemen nicht zwingend erforderlich, aber weiterhin möglich. Dementsprechend steht für Type II-Systeme eine deutlich breitere Palette an brauchbaren Härtern zur Verfügung. Hier können zum Beispiel nichtselbstemulgierende Härter wie aminbasierende Härter wie Waterpoxy® 801 eingesetzt werden, aber auch selbstemulgierende Härter wie z.B. Waterpoxy® 751.

Im Unterschied zu Typ I-Systemen benötigen die emulgierten, höhermolekularen Festharze der Type II-Systeme Koaleszensmittel damit eine gute Filmbildung gewährleistet ist. Dementsprechend besitzen sie im Unterschied zu Type I-Systemen zumeist einen VOC-Gehalt von 50-150 g/l. Es ist ebenfalls möglich, VOC-freie Festharzemulsionen einzusetzen.

Polyurethane (PU) sind allgemein bekannt, kommerziell erhältlich und bestehen im allgemeinen aus einer Weichphase aus höhermolekularen Polyhydroxylverbindungen, z.B. aus Polycarbonat, Polyester- oder Polyethersegmenten, und einer Urethan-Hartphase, gebildet aus niedermolekularen Kettenverlängerungsmitteln und Di- oder Polyisocyanaten.

Verfahren zur Herstellung von Polyurethanen (PU) sind allgemein bekannt. Im Allgemeinen werden Polyurethane (PU) durch Umsetzung von
(i) Isocyanaten, bevorzugt Diisocyanaten mit
(ii) gegenüber Isocyanaten reaktiven Verbindungen, üblicherweise mit einem Molekulargewicht (M_{w}) von 500 bis 10.000 g/mol, bevorzugt 500 bis 5.000 g/mol, besonders bevorzugt 800 bis 3.000 g/mol, und
(iii) Kettenverlängerungsmitteln mit einem Molekulargewicht von 50 bis 499 g/mol, gegebenenfalls in Gegenwart von
(iv) Katalysatoren
(v) und/oder üblichen Zusatzstoffen hergestellt.

Im Folgenden sollen beispielhaft die Ausgangskomponenten und Verfahren zur Herstellung der bevorzugten Polyurethane (PU) dargelegt werden. Die bei der Herstellung der Polyurethane (PU) üblicherweise verwendeten Komponenten (i), (ii), (iii) sowie gegebenenfalls (iv) und/oder (v) sollen im Folgenden beispielhaft beschrieben werden:
Als Isocyanate (i) können allgemein bekannte aliphatische, cycloaliphatische, araliphatische und/oder aromatische Isocyanate eingesetzt werden, beispielsweise Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanato-methyl-cyclohexan (Isophorondiisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-di-isocyanat und/oder 4,4'-, 2,4'- und 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyldiisocyanat, 1,2-Diphenylethandiisocyanat und/oder Phenylendiisocyanat. Bevorzugt wird 4,4'-MDI verwendet. Bevorzugt sind zudem aliphatische Diisocyanate, insbesondere Hexamethylendiisocyanat (HDI), und besonders bevorzugt sind aromatische Diisocyanate wie 2,2'-, 2,4'- und/oder 4,4'-Diphenylmethandiisocyanat (MDI) und Mischungen der vorstehend genannten Isomere.

Als gegenüber Isocyanaten reaktive Verbindungen (ii) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit Molekulargewichten (M_{w}) im Bereich von 500 bis 8.000 g/mol, bevorzugt 600 bis 6.000 g/mol, insbesondere 800 bis 3.000 g/mol, und bevorzugt einer mittleren Funktionalität gegenüber Isocyanaten von 1,8 bis 2,3, bevorzugt 1,9 bis 2,2, insbesondere 2. Bevorzugt setzt man Polyetherpolyole ein, beispielsweise solche auf der Basis von allgemein bekannten Startersubstanzen und üblichen Alkylenoxiden, beispielsweise Ethylenoxid, 1,2-Propylenoxid und/oder 1,2-Butylenoxid, bevorzugt Polyetherole basierend auf Polyoxytetramethylen (Poly-THF), 1,2-Propylenoxid und Ethylenoxid. Polyetherole weisen den Vorteil auf, dass sie eine höhere Hydrolysestabilität als Polyesterole besitzen, und sind bevorzugt als Komponente (ii), insbesondere zur Herstellung von weichen Polyurethanen Polyurethan (PU1).

Als Polycarbonatdiole sind insbesondere aliphatische Polycarbonatdiole zu nennen, beispielsweise 1,4-Butandiol-Polycarbonat und 1,6-Hexandiol-Polycarbonat.

Als Polyesterdiole sind solche zu nennen, die sich durch Polykondensation von mindestens einem primären Diol, vorzugsweise mindestens einen primären aliphatischen Diol, beispielsweise Ethylenglykol, 1,4-Butandiol, 1,6-Hexandiol, Neopentylglykol oder besonders bevorzugt 1,4-Dihydroxymethylcyclohexan (als Isomerengemisch) oder Mischungen von mindestens zwei der vorstehend genannten Diole einerseits und mindestens einer, bevorzugt mindestens zwei Dicarbonsäuren oder ihren Anhydriden andererseits herstellen lassen. Bevorzugte Dicarbonsäuren sind aliphatische Dicarbonsäuren wie Adipinsäure, Glutarsäure, Bernsteinsäure und aromatische Dicarbonsäuren wie beispielsweise Phthalsäure und insbesondere Isophthalsäure.

Polyetherole werden bevorzugt durch Anlagerung von Alkylenoxiden, insbesondere Ethylenoxid, Propylenoxid und Mischungen daraus, an Diole wie beispielsweise Ethylenglykol, 1,2-Propylenglykol, 1,2-Butylenglykol, 1,4-Butandiol, 1,3-Propandiol, oder an Triole wie beispielsweise Glycerin, in Gegenwart von hochaktiven Katalysatoren hergestellt. Derartige hochaktive Katalysatoren sind beispielsweise Cäsiumhydroxid und Dimetallcyanidkatalysatoren, auch als DMC-Katalysatoren bezeichnet. Ein häufig eingesetzter DMC-Katalysator ist das Zinkhexacyanocobaltat. Der DMC-Katalysator kann nach der Umsetzung im Polyetherol belassen werden, vorzugsweise wird er entfernt, beispielsweise durch Sedimentation oder Filtration.

Statt eines Polyols können auch Mischungen verschiedener Polyole eingesetzt werden.

Zur Verbesserung der Dispergierbarkeit kann man als gegenüber Isocyanaten reaktive Verbindungen (ii) anteilig auch ein oder mehr Diole oder Diamine mit einer Carbonsäuregruppe oder Sulfonsäuregruppe (b') einsetzen, insbesondere Alkalimetall- oder Ammoniumsalze von 1,1-Dimethylolbutansäure, 1,1-Dimethylolpropionsäure oder

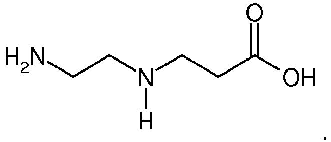

Als Kettenverlängerungsmittel (iii) werden an sich bekannte aliphatische, araliphatische, aromatische und/oder cycloaliphatische Verbindungen mit einem Molekulargewicht von 50 bis 499 g/mol und mindestens zwei funktionellen Gruppen, bevorzugt Verbindungen mit genau zwei funktionellen Gruppen pro Molekül, eingesetzt, beispielsweise Diamine und/oder Alkandiole mit 2 bis 10 C-Atomen im Alkylenrest, insbesondere 1,3-Propandiol, Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen pro Molekül, bevorzugt entsprechende Oligo- und/oder Polypropylenglykole, wobei auch Mischungen an Kettenverlängerungsmitteln (iii) eingesetzt werden können.

Besonders bevorzugt handelt es sich bei den Komponenten (i) bis (iii) um difunktionelle Verbindungen, d.h. Diisocyanate (i), difunktionelle Polyole, bevorzugt Polyetherole (ii) und difunktionelle Kettenverlängerungsmittel, bevorzugt Diole.

Geeignete Katalysatoren (iv), welche insbesondere die Reaktion zwischen den NCO-Gruppen der Diisocyanate (i) und den Hydroxylgruppen der Komponenten (ii) und (iii) beschleunigen, sind an sich bekannte tertiäre Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-[2,2,2)-octan ("DABCO") und ähnliche tertiäre Amine, sowie insbesondere organische Metallverbindungen wie Titansäureester, Eisenverbindungen wie z. B. Eisen-(III)- acetylacetonat, Zinnverbindungen, z. B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Komponente (ii) eingesetzt.

Neben Katalysator (iv) können den Komponenten (i) bis (iii) auch Hilfsmittel und/oder Zusatzstoffe (v) hinzugefügt werden. Genannt seien beispielsweise Treibmittel, Antiblockmittel, oberflächenaktive Substanzen, Füllstoffe, beispielsweise Füllstoffe auf Basis von Nanopartikeln, insbesondere Füllstoffe auf Basis von CaCO₃, weiterhin Keimbildungsmittel, Gleithilfemittel, Farbstoffe und Pigmente, Antioxidantien, z.B. gegen Hydrolyse, Licht, Hitze oder Verfärbung, anorganische und/oder organische Füllstoffe, Verstärkungsmittel und Weichmacher, Metalldeaktivatoren. In einer bevorzugten Ausführungsform fallen unter die Komponente (v) auch Hydrolyseschutzmittel wie beispielsweise polymere und niedermolekulare Carbodiimide. Bevorzugt enthält das weiche Polyurethan Triazol und/oder Triazolderivat und Antioxidantien in einer Menge von 0,1 bis 5 Gew.-% bezogen auf das Gesamtgewicht des betreffenden weichen Polyurethans. Als Antioxidantien sind im allgemeinen Stoffe geeignet, welche unerwünschte oxidative Prozesse im zu schützenden Kunststoff hemmen oder verhindern. Im Allgemeinen sind Antioxidantien kommerziell erhältlich. Beispiele für Antioxidantien sind sterisch gehinderte Phenole, aromatische Amine, Thiosynergisten, Organophosphorverbindungen des trivalenten Phosphors, und Hindered Amine Light Stabilizers. Beispiele für sterisch gehinderte Phenole finden sich in Plastics Additive Handbook, 5th edition, H. Zweifel, ed, Hanser Publishers, München, 2001 ([1]), S. 98-107 und S. 116 - S. 121. Beispiele für aromatische Amine finden sich in [1] S. 107-108. Beispiele für Thiosynergisten sind gegeben in [1], S.104-105 und S.112-113. Beispiele für Phosphite finden sich in [1], S.109-112.Beispiele für Hindered Amine Light Stabilizer sind gegeben in [1], S.123-136. Zur Verwendung im Antioxidantiengemisch eignen sich bevorzugt phenolische Antioxidantien. In einer bevorzugten Ausführungsform weisen die Antioxidantien, insbesondere die phenolischen Antioxidantien, eine Molmasse von größer 350 g/mol, besonders bevorzugt von größer 700g/mol und einer maximalen Molmasse (M_{w}) bis maximal 10.000 g/mol, bevorzugt bis maximal 3.000 g/mol auf. Ferner besitzen sie bevorzugt einen Schmelzpunkt von maximal 180°C. Weiterhin werden bevorzugt Antioxidantien verwendet, die amorph oder flüssig sind. Ebenfalls können als Komponente (v) auch Gemische von zwei oder mehr Antioxidantien verwendet werden.

Neben den genannten Komponenten (i), (ii) und (iii) und gegebenenfalls (iv) und (v) können auch Kettenregler (Kettenabbruchsmittel), üblicherweise mit einem Molekulargewicht von 31 bis 3000 g/mol, eingesetzt werden. Solche Kettenregler sind Verbindungen, die lediglich eine gegenüber Isocyanaten reaktive funktionelle Gruppe aufweisen, wie z.B. monofunktionelle Alkohole, monofunktionelle Amine und/oder monofunktionelle Polyole. Durch solche Kettenregler kann ein Fließverhalten, insbesondere bei weichen Polyurethanen, gezielt eingestellt werden. Kettenregler können im allgemeinen in einer Menge von 0 bis 5, bevorzugt 0,1 bis 1 Gew.-Teile, bezogen auf 100 Gew.-Teile der Komponente (ii) eingesetzt werden und fallen definitionsgemäß unter die Komponente (iii).

Neben den genannten Komponenten (i), (ii) und (iii) und gegebenenfalls (iv) und (v) können auch Vernetzungsmittel mit zwei oder mehr gegenüber Isocyanat reaktiven Gruppen gegen Schluss der Aufbaureaktion eingesetzt werden, beispielsweise Hydrazinhydrat.

Zur Einstellung der Härte von Polyurethan (PU) können die Komponenten (ii) und (iii) in relativ breiten molaren Verhältnissen gewählt werden. Bewährt haben sich molare Verhältnisse von Komponente (ii) zu insgesamt einzusetzenden Kettenverlängerungsmitteln (iii) von 10 : 1 bis 1 : 10, insbesondere von 1 : 1 bis 1 : 4, wobei die Härte der weichen Polyurethane mit zunehmendem Gehalt an (iii) ansteigt. Die Umsetzung zur Herstellung von Polyurethan (PU) kann bei einer Kennzahl von 0,8 bis 1,4 : 1, bevorzugt bei einer Kennzahl von 0,9 bis 1,2 : 1, besonders bevorzugt bei einer Kennzahl von 1,05 bis 1,2 : 1 erfolgen. Die Kennzahl ist definiert durch das Verhältnis der insgesamt bei der Umsetzung eingesetzten Isocyanatgruppen der Komponente (i) zu den gegenüber Isocyanaten reaktiven Gruppen, d.h. den aktiven Wasserstoffen, der Komponenten (ii) und gegebenenfalls (iii) und gegebenenfalls monofunktionellen gegenüber Isocyanaten reaktiven Komponenten als Kettenabbruchsmitteln wie z.B. Monoalkoholen.

Die Herstellung von Polyurethan (PU) kann nach an sich bekannten Verfahren kontinuierlich, beispielsweise nach One-shot oder dem Prepolymerverfahren, oder diskontinuierlich nach dem an sich bekannten Prepolymerprozess erfolgen. Bei diesen Verfahren können die zur Reaktion kommenden Komponenten (i), (ii), (iii) und gegebenenfalls (iv) und/oder (v) nacheinander oder gleichzeitig miteinander vermischt werden, wobei die Reaktion unmittelbar einsetzt.

Polyurethan (PU) kann man nach an sich bekannten Verfahren in Wasser dispergieren, beispielsweise indem man Polyurethan (PU) in Aceton löst oder als Lösung in Aceton herstellt, mit Wasser versetzt und danach das Aceton entfernt, beispielsweise durch Abdestillieren. In einer Variante stellt man Polyurethan (PU) als Lösung in N-Methylpyrrolidon oder N-Ethylpyrrolidon her, versetzt mit Wasser und entfernt das N-Methylpyrrolidon bzw. N-Ethylpyrrolidon.

In einer Ausführungsform der vorliegenden Erfindung enthalten erfindungsgemäße wässrige Dispersionen zwei verschiedene Polyurethane Polyurethan (PU1) und Polyurethan (PU2), von denen Polyurethan (PU1) ein so genanntes weiches Polyurethan ist, das wie oben als Polyurethan (PU) beschrieben aufgebaut ist, und mindestens ein hartes Polyurethan (PU2).

Hartes Polyurethan (PU2) kann man im Grundsatz analog zu weichem Polyurethan (PU1) herstellen, jedoch wählt man andere gegenüber Isocyanaten reaktiven Verbindungen (ii) oder andere Mischungen von gegenüber Isocyanaten reaktiven Verbindungen (ii), im Rahmen der vorliegenden Erfindung auch als gegenüber Isocyanaten reaktiven Verbindungen (ii-2) oder kurz Verbindungen (ii-2) bezeichnet.

Beispiele für Verbindungen (ii-2) sind insbesondere 1,4-Butandiol, 1,6-Hexandiol und Neopentylglykol, entweder in Mischung miteinander oder in Mischung mit Polyethylenglykol.

In einer Variante der vorliegenden Erfindung wählt man als Diisocyanat (i) für Polyurethan (PU2) jeweils Mischungen von Diisocyanaten, beispielsweise Mischungen von HDI und IPDI, wobei man zur Herstellung von hartem Polyurethan (PU2) größere Anteile an IPDI wählt als zur Herstellung von weichem Polyurethan (PU1).

In einer Ausführungsform der vorliegenden Erfindung weist Polyurethan (PU2) einen Shore-Härte A im Bereich von über 60 bis maximal 100 auf, wobei die Shore-Härte A nach DIN 53505 nach 3 s bestimmt wurde.

In einer Ausführungsform der vorliegenden Erfindung weist Polyurethan (PU) einen mittleren Partikeldurchmesser im Bereich von 100 bis 300 nm, bevorzugt 120 bis 150 nm auf, bestimmt durch Laserlichtstreuung.

In einer Ausführungsform der vorliegenden Erfindung weist weiches Polyurethan (PU1) einen mittleren Partikeldurchmesser im Bereich von 100 bis 300 nm, bevorzugt 120 bis 150 nm auf, bestimmt durch Laserlichtstreuung.

In einer Ausführungsform der vorliegenden Erfindung weist Polyurethan (PU2) einen mittleren Partikeldurchmesser im Bereich von 100 bis 300 nm, bevorzugt 120 bis 150 nm auf, bestimmt durch Laserlichtstreuung.

Bevorzugt handelt es sich bei Polymerschicht (C) um eine Polyurethanschicht, eine PVC-Schicht, eine Schicht aus einem Epoxidharz, eine Polyacrylatschicht oder eine Polybutadienschicht, besonders bevorzugt um eine Polyurethanschicht. Besonders bevorzugt handelt es sich bei Polymerschicht (C) um eine Polyurethanschicht.

In einer Ausführungsform der vorliegenden Erfindung weist Polymerschicht (C) eine mittlere Dicke im Bereich von 15 bis 300 µm, bevorzugt von 20 bis 150 µm, besonders bevorzugt von 25 bis 80 µm auf.

In einer Ausführungsform der vorliegenden Erfindung weist Polymerschicht (C) im Mittel mindestens 100, bevorzugt mindestens 250, besonders bevorzugt mindestens 1000 Kapillaren pro 100 cm² auf.

In einer Ausführungsform der vorliegenden Erfindung weisen die Kapillaren einen mittleren Durchmesser im Bereich von 0,005 bis 0,05 mm, bevorzugt 0,009 bis 0,03 mm auf.

In einer Ausführungsform der vorliegenden Erfindung sind die Kapillaren gleichmäßig über Polymerschicht (C) verteilt. In einer bevorzugten Ausführungsform der vorliegenden Erfindung sind die Kapillaren jedoch ungleichmäßig über die Polymerschicht (C) verteilt.

In einer Ausführungsform der vorliegenden Erfindung sind die Kapillaren im Wesentlichen gebogen. In einer anderen Ausführungsform der vorliegenden Erfindung weisen die Kapillaren einen im Wesentlichen gradlinigen Verlauf auf.

Die Kapillaren verleihen der Polymerschicht (C) eine Luft- und Wasserdampfdurchlässigkeit, ohne dass eine Perforierung erforderlich wäre. In einer Ausführungsform der vorliegenden Erfindung kann die Wasserdampfdurchlässigkeit der Polymerschicht (C) über 1,5 mg/cm²·h liegen, gemessen nach DIN 53333. So ist es möglich, dass beispielsweise Wirkstoff enthaltende Flüssigkeiten durch die Polymerschicht (C) hindurch migrieren können.

In einer Ausführungsform der vorliegenden Erfindung weist Polymerschicht (C) zusätzlich zu den Kapillaren noch Poren auf, die nicht über die gesamte Dicke der Polymerschicht (C) gehen.

In einer Ausführungsform weist Polymerschicht (C), insbesondere Polyurethanschicht (C) eine Musterung auf. Die Musterung kann beliebig sein und beispielsweise die Musterung eines Leders oder einer Holzoberfläche wiedergeben. In einer Ausführungsform der vorliegenden Erfindung kann die Musterung ein Nubukleder wiedergeben.

In einer Ausführungsform der vorliegenden Erfindung weist Polymerschicht (C), insbesondere Polyurethanschicht (C) eine samtartige Erscheinung auf.

In einer Ausführungsform der vorliegenden Erfindung kann die Musterung einer Samtoberfläche entsprechen, beispielsweise mit Härchen mit einer mittleren Länge von 20 bis 500 µm, bevorzugt 30 bis 200 µm und besonders bevorzugt 60 bis 100 µm. Die Härchen können beispielsweise einen kreisförmigen Durchmesser aufweisen. In einer besonderen Ausführungsform der vorliegenden Erfindung haben die Härchen eine kegelförmige Form.

In einer Ausführungsform der vorliegenden Erfindung weist Polymerschicht (C), insbesondere Polyurethanschicht (C) Härchen auf, die in einem mittleren Abstand von 50 bis 350, bevorzugt 100 bis 250 µm zueinander angeordnet sind.

Für den Fall, dass die Polymerschicht (C), insbesondere Polyurethanschicht (C) Härchen aufweist, beziehen sich die Angaben über die mittlere Dicke auf die Polyurethanschicht (C) ohne die Härchen.

In anderen Ausführungsformen weist Polymerschicht (C), insbesondere Polyurethanschicht (C) Schriftzüge, Logos, oder Bilder auf.

In einer Ausführungsform weist Polymerschicht (C), insbesondere Polyurethanschicht (C) komplizierte Bilder auf, wie sie in WO 2012/072740 beschrieben sind.

In einer bevorzugten Ausführungsform wird Polymerschicht (C), insbesondere Polyurethanschicht (C) aus einer wässrigen Polymerdispersion, bevorzugt Polyurethandispersion gebildet, die mindestens einen Vernetzer V enthält, wobei der mindestens eine Vernetzer V mindestens ein Polyisocyanat P ist, das mit mindestens einem Blockierungsmittel BM blockiert ist.

In einer besonders bevorzugten Ausführungsform der Erfindung enthalten wässrige Polymer-/Polyurethandispersionen zur Herstellung von Verbindungsschichten (B) und /oder Polymerschicht (C), insbesondere Polyurethanschicht (C) 0,1 bis 5 Gew% von Dipropylenglycoldimethylether und/oder 1,2-Propandiol-diacetat.

In einer besonders bevorzugten Ausführungsform werden den wässrigen Polymer/Polyurethandispersionen geeignete Vernetzer V als 1 bis 80 Gew%ige Lösung in Dipropylenglycoldimethylether und/oder 1,2-Propandiol-diacetat zugegeben, bevorzugt als 30 bis 75 Gew%ige Lösung in Dipropylenglycoldimethylether und/oder 1,2-Propandiol-diacetat.

In einer besonders bevorzugten Ausführungsform werden den wässrigen Polymer/Polyurethandispersionen Polyisocyanat-Vernetzer V als 30 bis 75 Gew%ige Lösung in Dipropylenglycoldimethylether und/oder 1,2-Propandiol-diacetat zugegeben.

Erfindungsgemäß enthält mindestens eine der Schichten (B) und (C) mindestens einen mit Blockierungsmittel BM blockiertes Polyisocyanat P. In einer bevorzugten Ausführungsform enthalten sowohl Schicht (B) als auch Schicht (C) mit Blockierungsmittel BM blockiertes Polyisocyanat P. Geeignete Polyisocyanate P und Blockierungsmittel BM sind weiter oben beschrieben.

Erfindungsgemäß enthält Vernetzer V und Polyisocyanat P bei Raumtemperatur keine freien Isocyanatgruppen.

Die in den Schichten (B) und (C) enthaltenen mit Blockierungsmittel BM blockierten Polyisocyanate P können gleich oder unterschiedlich sein. Bevorzugt enthalten Schichten (B) und (C) gleiche mit Blockierungsmittel BM blockierte Polyisocyanate P.

Für den Fall, dass die Polymerschicht (C), insbesondere Polyurethanschicht (C) Härchen aufweist, beziehen sich die Angaben über die mittlere Dicke auf die Polyurethanschicht (C) ohne die Härchen.

In anderen Ausführungsformen weist Polymerschicht (C), insbesondere Polyurethanschicht (C) Schriftzüge, Logos, oder Bilder auf.

In einer Ausführungsform weist Polymerschicht (C), insbesondere Polyurethanschicht (C) komplizierte Bilder auf, wie sie in WO 2012/072740 beschrieben sind.

Erfindungsgemäß wird Polymerschicht (C), insbesondere Polyurethanschicht (C) aus einer wässrigen Polymerdispersion, bevorzugt Polyurethandispersion gebildet, die mindestens einen Vernetzer V enthält, wobei der mindestens eine Vernetzer V mindestens ein Polyisocyanat P ist, das mit mindestens einem Blockierungsmittel BM blockiert ist, wobei das mindestens eine Blockierungsmittel BM ausgewählt ist aus Malonsäureestern, Acetoacetaten, Oximen, Pyrazolen, Lactamen und Phenolen.

In einer besonders bevorzugten Ausführungsform der Erfindung enthalten wässrige Polymer-/Polyurethandispersionen zur Herstellung von Verbindungsschichten (B) und /oder Polymerschicht (C), insbesondere Polyurethanschicht (C) 0,1 bis 5 Gew% von Dipropylenglycoldimethylether und/oder 1,2-Propandiol-diacetat.

In einer besonders bevorzugten Ausführungsform werden den wässrigen Polymer/Polyurethandispersionen geeignete Vernetzer V als 1 bis 80 Gew%ige Lösung in Dipropylenglycoldimethylether und/oder 1,2-Propandiol-diacetat zugegeben, bevorzugt als 30 bis 75 Gew%ige Lösung in Dipropylenglycoldimethylether und/oder 1,2-Propan-diol-diacetat.

In einer besonders bevorzugten Ausführungsform werden den wässrigen Polymer/Polyurethandispersionen Polyisocyanat-Vernetzer V als 30 bis 75 Gew%ige Lösung in Dipropylenglycoldimethylether und/oder 1,2-Propandiol-diacetat zugegeben.

Erfindungsgemäß enthält mindestens eine der Schichten (B) und (C) mindestens einen mit Blockierungsmittel BM blockiertes Polyisocyanat P. In einer bevorzugten Ausführungsform enthalten sowohl Schicht (B) als auch Schicht (C) mit Blockierungsmittel BM blockiertes Polyisocyanat P. Geeignete Polyisocyanate P und Blockierungsmittel BM sind weiter oben beschrieben.

Erfindungsgemäß enthält Vernetzer V und Polyisocyanat P bei Raumtemperatur keine freien Isocyanatgruppen.

Die in den Schichten (B) und (C) enthaltenen mit Blockierungsmittel BM blockierten Polyisocyanate P können gleich oder unterschiedlich sein. Bevorzugt enthalten Schichten (B) und (C) gleiche mit Blockierungsmittel BM blockierte Polyisocyanate P.

Das erfindungsgemäße Verfahren wird üblicherweise so ausgeführt, dass man mit Hilfe einer Matrize eine Polymerschicht (C) bildet (Schritt(a)), gegebenenfalls mindestens einen organischen Klebstoff vollflächig oder partiell auf Trägermaterial (A) und/oder auf Polymerschicht (C) aufbringt (Schritt (b)) und dann Polymerschicht (C) mit Trägermaterial (A) punktförmig, streifenartig oder flächig verbindet (Schritt(c)), wobei Polymerschicht (C) und/oder die gegebenenfalls mindestens eine Verbindungsschicht (B) aus wässrigen Polymerdispersionen hergestellt werden, die mindestens einen Vernetzer V enthalten, wobei der mindestens eine Vernetzer V mindestens ein Polyisocyanat P ist, dessen Isocyanatgruppen bei Raumtemperatur mit mindestens einem Blockierungsmittel BM blockiert sind.

Vorzugsweise handelt es sich bei der Matrize um eine Silikonmatrize. Unter Silikonmatrizen werden im Rahmen der vorliegenden Erfindung solche Matrizen verstanden, zu deren Herstellung mindestens ein Bindemittel eingesetzt wird, das mindestens eine, bevorzugt mindestens drei
O-Si(R¹R²)-O-Gruppen pro Molekül aufweist. Dabei sind R¹ und - so vorhanden - R² verschieden oder vorzugsweise gleich und gewählt aus organischen Gruppen und bevorzugt C₁-C₆-Alkyl, insbesondere Methyl.

In einer Ausführungsform der vorliegenden Erfindung handelt es sich bei der Silikonmatrize um eine mit Hilfe von Lasergravur strukturierte Silikonmatrize.

In einer anderen Ausführungsform handelt es sich bei der Matrize um eine Matrize aus Ethylen-Propylen-Kautschuk (EPM) oder Ethylen-Propylen-Dien-Kautschuk (EPDM). In einer Ausführungsform der vorliegenden Erfindung handelt es sich bei der Matrize aus EPM oder EPDM um eine mit Hilfe von Lasergravur strukturierte Matrize.

Schritt (a) kann man wie folgt durchführen.

Man bringt eine wässrige Polymer-Dispersion auf eine Matrize auf, die vorgewärmt ist und lässt das Wasser verdunsten.

Das Aufbringen von wässriger Polymer-Dispersion auf die Matrize kann nach an sich bekannten Methoden erfolgen, insbesondere durch Aufsprühen, beispielsweise mit einer Sprühpistole.

Die Matrize weist Musterung, auch Strukturierung genannt, auf, die man beispielsweise durch Lasergravur erzeugt oder durch Abformen.

Wünscht man die Matrize mit Hilfe von Lasergravur zu strukturieren, so ist es bevorzugt, die lasergravierbare Schicht vor der Lasergravur durch Erwärmen (thermochemisch), durch Bestrahlen mit UV-Licht (photochemisch) oder durch Bestrahlen mit energiereicher Strahlung (aktinisch) oder einer beliebigen Kombination davon zu verstärken.

Anschließend wird die lasergravierbare Schicht oder der Schichtverbund auf einen zylindrischen (temporären) Träger, beispielsweise aus Kunststoff, glasfaserverstärktem Kunststoff, Metall oder Schaum, beispielsweise mittels Klebeband, Unterdruck, Klemmvorrichtungen oder Magnetkraft, aufgebracht und wie oben beschrieben graviert. Alternativ kann auch die plane Schicht bzw. der Schichtverbund wie oben beschrieben graviert werden. Optional wird während des Lasergravurvorgangs die lasergravierbare Schicht mit einem Rundwascher oder einem Durchlaufwascher mit einem Reinigungsmittel zur Entfernung von Gravurrückständen gewaschen.

Auf die beschriebene Weise kann die Matrize als Negativmatrize oder als Positivmatrize hergestellt werden.

In einer ersten Variante weist die Matrize eine Negativ-Struktur auf, so dass die mit Folie (A) verbindbare Beschichtung direkt durch Auftragen eines flüssigen Kunststoffmaterials auf die Oberfläche der Matrize und anschließender Verfestigung des Polymers erhalten werden kann.

In einer zweiten Variante weist die Matrize eine Positiv-Struktur auf, so dass zunächst eine Negativ-Matrize durch Abformung von der laserstrukturierten Positivmatrize hergestellt wird. Von dieser Negativ-Matrize kann die mit einem flächigen Träger verbindbare Beschichtung anschließend durch Auftragen eines flüssigen Kunststoffmaterials auf die Oberfläche der Negativmatrize und anschließender Verfestigung des Kunststoffmaterials erhalten werden.

Vorzugsweise werden in die Matrize Strukturelemente mit Abmessungen im Bereich von 10 bis 500 µm eingraviert. Die Strukturelemente können als Erhebungen oder Vertiefungen ausgebildet sein. Vorzugsweise haben die Strukturelemente eine einfache geometrische Form und sind beispielsweise Kreise, Ellipsen, Quadraten, Rauten, Dreiecken und Sterne. Die Strukturelemente können ein regelmäßiges oder unregelmäßiges Raster bilden. Beispiele sind ein klassisches Punktraster oder ein stochastisches Raster, beispielsweise ein frequenzmoduliertes Raster.

In einer Ausführungsform der vorliegenden Erfindung arbeitet man zur Strukturierung der Matrize mit Hilfe eines Lasers Näpfchen in die Matrize ein, die eine mittlere Tiefe im Bereich von 50 bis 250 µm aufweisen und einen Mittenabstand im Bereich von 50 bis 250 µm.

Beispielsweise kann man die Matrize so gravieren, dass sie "Näpfchen" (Vertiefungen) aufweist, welche einen Durchmesser im Bereich von 10 bis 500 µm an der Oberfläche der Matrize aufweisen. Vorzugsweise beträgt der Durchmesser an der Oberfläche der Matrize 20 bis 250 µm und besonders bevorzugt 30 bis 150 µm. Der Abstand der Näpfchen kann beispielsweise 10 bis 500 µm, vorzugsweise 20 bis 200 µm, besonders bevorzugt bis 80 µm betragen.

In einer Ausführungsform der vorliegenden Erfindung weist die Matrize vorzugsweise neben einer Oberflächen-Grobstruktur noch eine Oberflächen-Feinstruktur auf. Sowohl Grob- als auch Feinstruktur können durch Lasergravur erzeugt werden. Die Feinstruktur kann beispielsweise eine Mikrorauigkeit mit einer Rauhigkeitsamplitude im Bereich von 1 bis 30 µm und einer Rauhigkeitsfrequenz von 0,5 bis 30 µm sein. Bevorzugt liegen die Dimensionen der Mikrorauigkeit im Bereich von 1 bis 20 µm, besonders bevorzugt 2 bis 15 µm und besonders bevorzugt 3 bis 10 µm.

Zur Lasergravur eigenen sich insbesondere IR-Laser. Es können aber auch Laser mit kürzeren Wellenlängen eingesetzt werden, vorausgesetzt der Laser weist eine ausreichende Intensität auf. Beispielsweise kann ein frequenzverdoppelter (532 nm) oder frequenzverdreifachter (355 nm) Nd-YAG-Laser eingesetzt werden, oder auch ein Excimer-Laser (z.B. 248 nm). Zur Lasergravur kann beispielsweise ein CO₂-Laser mit einer Wellenlänge von 10640 nm eingesetzt werden. Besonders bevorzugt werden Laser mit einer Wellenlänge von 600 bis 2000 nm eingesetzt. Beispielsweise können Nd-YAG-Laser (1064 nm), IR-Diodenlaser oder Festkörperlaser eingesetzt werden. Besonders bevorzugt sind Nd/YAG-Laser. Die einzugravierende Bildinformation wird direkt aus dem Lay-Out-Computersystem zur Laserapparatur übertragen. Die Laser können entweder kontinuierlich oder gepulst betrieben werden.

Im Regelfall kann die erhaltene Matrize nach der Herstellung direkt eingesetzt werden. Falls gewünscht, kann die erhaltene Matrize noch nachgereinigt werden. Durch einen solchen Reinigungsschritt werden losgelöste, aber eventuell noch nicht vollständig von der Oberfläche entfernte Schichtbestandteile entfernt. Im Regelfalle ist einfaches Behandeln mit Wasser, Wasser/Tensid, Alkoholen oder inerten organischen Reinigungsmitteln ausreichend, die vorzugsweise quellungsarm sind.

In einem weiteren Schritt bringt man eine wässrige Formulierung von Polymer auf die Matrize auf. Das Aufbringen kann vorzugsweise durch Aufsprühen erfolgen. Die Matrize sollte erwärmt sein, wenn man die Formulierung von Polymer aufbringt, beispielsweise auf Temperaturen von mindestens 80°C, bevorzugt mindestens 90°C. Das Wasser aus der wässrigen Formulierung von Polymer verdampft und bildet die Kapillaren in der sich verfestigenden Polymerschicht.

Unter wässrig wird im Zusammenhang mit der Polymerdispersion verstanden, dass sie Wasser enthält, aber weniger als 5 Gew.-%, bezogen auf die Dispersion, bevorzugt weniger als 1 Gew.-% organisches Lösungsmittel. Besonders bevorzugt lässt sich kein flüchtiges organisches Lösungsmittel nachweisen. Unter flüchtigen organischen Lösungsmitteln werden im Rahmen der vorliegenden Erfindung solche organischen Lösungsmittel verstanden, die bei Normaldruck einen Siedepunkt von bis zu 200°C aufweisen.

In einer Ausführungsform der vorliegenden Erfindung enthält wässrige Polymerdispersion mindestens einen Zusatz, gewählt aus Pigmenten, Mattierungsmitteln, Lichtschutzmitteln, Flammschutzmitteln, Antioxidantien, Antistatika, Antisoil, Antiknarz, Verdickungsmitteln, insbesondere Verdickungsmitteln auf Basis von Polyurethanen, Hydrophobierungsmitteln, Oleophobierungsmitteln und Mikrohohlkugeln.

In einer Ausführungsform der vorliegenden Erfindung enthält wässrige Polymerdispersion insgesamt bis zu 20 Gew.-% an Zusätzen.

Wässrige Polymerdispersion kann außerdem ein oder mehrere organische Lösemittel enthalten. Geeignete organische Lösemittel sind beispielsweise Alkohole wie Ethanol oder Isopropanol und insbesondere Glykole, Diglykole, Triglykole oder Tetraglykole und zweifach oder vorzugsweise einfach mit C₁-C₄-Alkyl veretherte Glykole, Diglykole, Triglykole oder Tetraglykole. Beispiele für geeignete organische Lösemittel sind Ethylenglykol, Propylenglykol, Butylenglykol, Diethylenglykol, Triethylenglykol, Tetraethylenglykol, Dipropylenglykol, 1,2-Dimethoxyethan, Methyltriethylenglykol ("Methyltriglykol") und Triethylenglykol-n-butylether ("Butyltriglykol").

In einer Ausführungsform der Erfindung enthalten wässrige Polymere, insbesondere Polyurethandispersionen kein Propylencarbonat.

In einer bevorzugten Ausführungsform wird Polymerschicht (C) aus einer wässrigen Polymerdispersion, bevorzugt Polyurethandispersion gebildet, die mindestens einen Vernetzer V enthält, wobei der mindestens eine Vernetzer V mindestens ein Polyisocyanat P ist, das mit mindestens einem Blockierungsmittel BM blockiert ist, wie sie oben definiert sind.

In einer Ausführungsform der Erfindung enthalten wässrige Polymer-/ Polyurethandispersionen zur Herstellung von Verbindungsschichten (B) und /oder Polymerschicht (C) 0,1 bis 5 Gew% von Dipropylenglycoldimethylether und/oder 1,2-Propandiol-diacetat.

In einer besonders bevorzugten Ausführungsform werden den wässrigen Polymer/Polyurethandispersionen zur Herstellung der mindestens einen Polymerschicht (C) geeignete Vernetzer V als 1 bis 80 Gew%ige Lösung in Dipropylenglycoldimethylether und/oder 1,2-Propandiol-diacetat zugegeben, bevorzugt als 30 bis 75 Gew%ige Lösung in Dipropylenglycoldimethylether und/oder 1,2-Propandiol-diacetat.

In einer besonders bevorzugten Ausführungsform werden den wässrigen Polymer/Polyurethandispersionen zur Herstellung der mindestens einen Polymerschicht (C) Polyisocyanat-Vernetzer V als 30 bis 75 Gew%ige Lösung in Dipropylenglycoldimethylether und/oder 1,2-Propandiol-diacetat zugegeben.

Nach dem Aushärten der Polymerschicht (C) trennt man sie von der Matrize, beispielsweise durch Abziehen, und erhält einen Polymerfilm, der in erfindungsgemäßem mehrschichtigem Verbundsystem die Polymerschicht (C) bildet.

In einer bevorzugten Ausführungsform der vorliegenden Erfindung kann man die Matrize auch als Schutzschicht dienen lassen und erst nach der Herstellung des eigentlichen mehrschichtigen Verbundsystems entfernen.

Schritt (b) kann man wie folgt durchführen.

Man bringt eine wässrige Dispersion mindestens eines organischen Klebstoffs auf Polymerfilm (C) und/oder Träger (A) auf und lässt das Wasser vollständig oder teilweise, bevorzugt vollständig, verdunsten. Bei der wässrigen Dispersion mindestens eines organischen Klebstoffs handelt es sich in der Regel um eine Polymerdispersion, bevorzugt um eine Polyurethandispersion.

Das Aufbringen von wässriger Klebstoff-Dispersion auf die Matrize kann nach an sich bekannten Methoden erfolgen, insbesondere durch Aufsprühen, beispielsweise mit einer Sprühpistole, Rakeln oder Streichen.

In einer Ausführungsform der vorliegenden Erfindung enthält wässrige Dispersion mindestens eines organischen Klebstoffs mindestens einen Zusatz, gewählt aus Pigmenten, Mattierungsmitteln, Lichtschutzmitteln, Flammschutzmitteln, Antioxidantien, Antistatika, Antisoil, Antiknarz, Verdickungsmitteln, insbesondere Verdickungsmitteln auf Basis von Polyurethanen, und Mikrohohlkugeln.

In einer Ausführungsform der vorliegenden Erfindung enthält die wässrige Dispersion mindestens eines organischen Klebstoffs insgesamt bis zu 20 Gew.-% an Zusätzen.

Die wässrige Dispersion mindestens eines organischen Klebstoffs kann außerdem ein oder mehrere organische Lösemittel enthalten. Geeignete organische Lösemittel sind beispielsweise Alkohole wie Ethanol oder Isopropanol und insbesondere Glykole, Diglykole, Triglykole oder Tetraglykole und zweifach oder vorzugsweise einfach mit C₁-C₄-Alkyl veretherte Glykole, Diglykole, Triglykole oder Tetraglykole. Beispiele für geeignete organische Lösemittel sind Ethylenglykol, Propylenglykol, Butylenglykol, Diethylenglykol, Triethylenglykol, Tetraethylenglykol, Dipropylenglykol, 1,2-Dimethoxyethan, Methyltriethylenglykol ("Methyltriglykol") und Triethylenglykol-n-butylether ("Butyltriglykol").

In einer Ausführungsform der Erfindung enthalten wässrige Polymer-, insbesondere Polyurethandispersionen kein Propylencarbonat.

In einer bevorzugten Ausführungsform wird die mindestens eine Verbindungsschicht (B) aus einer wässrigen Klebstoffdispersion, in der Regel eine Polymerdispersion, bevorzugt Polyurethandispersion gebildet, die mindestens einen Vernetzer V enthält, wobei der mindestens eine Vernetzer V mindestens ein Polyisocyanat P ist, das mit mindestens einem Blockierungsmittel BM blockiert ist, wie sie oben definiert sind.

In einer Ausführungsform der Erfindung enthalten wässrige Polymer-/Polyurethandispersionen zur Herstellung der mindestens einen Verbindungsschicht (B) 0,1 bis 5 Gew% von Dipropylenglycoldimethylether und/oder 1,2-Propandiol-diacetat.

In einer besonders bevorzugten Ausführungsform werden den wässrigen Polymer/Polyurethandispersionen zur Herstellung der mindestens einen Verbindungsschicht (B) geeignete Vernetzer V als 1 bis 80 Gew%ige Lösung in Dipropylenglycoldimethylether und/oder 1,2-Propandiol-diacetat zugegeben, bevorzugt als 30 bis 75 Gew%ige Lösung in Dipropylenglycoldimethylether und/oder 1,2-Propandiol-diacetat.

In einer besonders bevorzugten Ausführungsform werden den wässrigen Polymer/Polyurethandispersionen zur Herstellung der mindestens einen Verbindungsschicht (B) Polyisocyanat-Vernetzer V als 30 bis 75 Gew%ige Lösung in Dipropylenglycoldimethylether und/oder 1,2-Propandiol-diacetat zugegeben.

In einem weiteren Arbeitsgang des erfindungsgemäßen Herstellverfahrens bringt man vorzugsweise organischen Klebstoff auf Polymer-/Polyurethanfilm (C) und/oder Träger (A) auf, und zwar entweder vollflächig oder nicht vollflächig, beispielsweise in Form von Punkten oder Streifen. In einer Variante der vorliegenden Erfindung bringt man einen vorzugsweise organischen Klebstoff auf Polymerfilm (C) und einen vorzugsweise organischen Klebstoff auf Träger (A) auf, wobei sich die beiden Klebstoffe unterscheiden, beispielsweise durch einen oder mehrere Zusätze oder dadurch, dass es sich um chemisch verschiedene vorzugsweise organische Klebstoffe handelt.

Anschließend verbindet man in Schritt c) Polymerfilm (C) und Träger (A), und zwar so, dass die Schicht(en) von Klebstoff zwischen Polymer-/Polyurethanfilm (C) und Träger (A) zu liegen kommen. Man härtet den Klebstoff bzw. die Klebstoffe aus, beispielsweise thermisch, durch aktinische Strahlung oder durch Alterung, und erhält erfindungsgemäßes mehrschichtiges Verbundmaterial.

Zur Verbesserung der Haftung von Polymerschicht (C) mit den anderen Bestandteilen des erfindungsgemäßen mehrschichtigen Verbundsystems kann man komprimieren, beispielsweise mit Hilfe eines Kalanders. Geeignete Anpressdrücke können im Bereich von 1 bis 20 bar liegen. Geeignete Anpressdauern können im Bereich von 10 bis 200 Sekunden liegen. Geeignete Anpresstemperaturen können im Bereich von 80 bis 140°C liegen.

Mehrschichtigen Verbundmaterialien, die nach dem erfindungsgemäßen Verfahren hergestellt worden sind, weisen angenehme optische und haptische Eigenschaften auf und zeigen überraschend gute mechanische Eigenschaften wie Reibechtheiten, Knickechtheiten. Zudem weisen Sie gute Gebrauchseigenschaften auf und lassen sich gut reinigen, zum Beispiel durch mechanische Reinigung oder chemische Reinigung, zum Beispiel mit überkritischen Kohlendioxid oder organischen Lösungsmitteln wie Kohlenwasserstoffen oder halogenierten Kohlenwasserstoffen.

Insbesondere weisen sie überlegenen Lagerungs- und Alterungseigenschaften, insbesondere Heißlichtalterungsgeigenschaften, Hydrolyseeigenschaften auf.

Weiterhin weisen Verbundmaterialien, die nach dem erfindungsgemäßen Verfahren hergestellt worden sind, eine sehr konstante Qualität auf, da die verwendeten wässrigen Polymerdispersionen über lange Zeit lagerstabil sind.

Es ist eines der überraschenden Ergebnisse, dass die Verwendung von Vernetzern V ausgewählt aus mindestens ein Polyisocyanat P, das mit mindestens einem Blockierungsmittel BM blockiert ist, die Lagerungseigenschaften, Alterungseigenschaften und die mechanischen Eigenschaften verbessert, ohne die optischen und haptischen Eigenschaften signifikant zu beeinträchtigen.

Es ist eines der überraschenden Ergebnisse, dass die Verwendung von mit mindestens einem Blockierungsmittel BM blockierten Polyisocyanaten P zu Kompositmaterialien führt, die hervorragende Abriebeigenschaften und mechanische Festigkeit aufweisen.

Außerdem zeigte sich, dass Kompositmaterialien, die nach dem erfindungsgemäßen Verfahren hergestellt worden sind, nach der Herstellung sofort klebfrei waren und nach der Herstellung sehr schnell gestapelt, aufgerollt oder anderweitig gelagert werden konnten.

### Beispiele

### Verwendete Trägermaterialien:

A.1. Gestrick 100% Polyester, gefärbt in der Farbe beige
A.2. Gestrick 100% Polyester, gewaschen und fixiert, mit einseitiger glatten
   PU-Beschichtung in der Farbe Schwarz

### Beispiel I.1.: Dispersionsmischung für die Verbindungsschicht (B)

Bei Raumtemperatur wurden 65 Teile (Alle Mengenangeben und Anteile im Experimentellen sind Gewichtsanteile) Wasser vorgelegt. Hierzu wurden unter ständigem Rühren 645 Teile einer wässrigen Dispersion (Feststoffgehalt 40 Gew%) eines Polyesterpolyurethans mit einer Glastemperatur von -46°C gegeben. Hierzu wurden unter Rühren 195 Teile einer wässrigen Dispersion (Feststoffgehalt 62 Gew%) eines Acrylsäure-Acrylnitril Copolymers mit einer Glastemperatur von -22°C gegeben. Hierzu wurden unter Rühren 95 Teile einer wässrigen Dispersion (Feststoffgehalt 40 Gew%) eines anionischen Polyurethans mit einer Shorehärte (A) von 56 gegeben. Das Gemisch wurde für 15 Minuten gerührt.

### Beispiel I.2.: Dispersionsmischung für die Polymerschicht (C)

Bei Raumtemperatur wurden 155 Teile Wasser vorgelegt. Hierzu wurden unter ständigem Rühren 445 Teile einer wässrigen Dispersion (Feststoffgehalt 40 Gew%) eines anionischen aliphatischen Polyetherpolyurethans mit einer Shorehärte (A) von 65 gegeben. Hierzu wurden unter Rühren 365 Teile einer wässrigen Dispersion (Feststoffgehalt 35 Gew%) eines aliphatischen anionischen Polyurethans gegeben. Hierzu wurden unter Rühren 35 Teile einer wässrigen Dispersion (Feststoffgehalt 67 Gew%) eines vorvernetzten Silicon-Kautschuks gegeben. Das Gemisch wurde für 15 Minuten gerührt.

### Beispiel I.3.: Dispersionsmischung für die Polymerschicht (C)

Bei Raumtemperatur wurden 200 Teile Wasser vorgelegt. Hierzu wurden unter ständigem Rühren 725 Teile einer wässrigen Dispersion (Feststoffgehalt 40 Gew%) eines anionischen aliphatischen Polyetherpolyurethans mit einer Shorehärte (A) von 65 gegeben. Hierzu wurden unter Rühren 75 Teile einer wässrigen Dispersion (Feststoffgehalt 67 Gew%) eines vorvernetzten Silicon-Kautschuks gegeben. Das Gemisch wurde für 15 Minuten gerührt.

### Beispiel I.4.: Dispersionsmischung für die Polymerschicht (C)

Bei Raumtemperatur wurden 100 Teile Wasser vorgelegt. Hierzu wurden unter ständigem Rühren 465 Teile einer wässrigen Dispersion (Feststoffgehalt 27 Gew%) eines anionischen aliphatischen Polyurethans, die 2% Siliciumdioxid als Mattierungsmittel enthielt, gegeben. Hierzu wurden unter Rühren 315 Teile einer wässrigen Dispersion (Feststoffgehalt 40 Gew%) eines aliphatischen anionischen Polyurethans mit einer Shorehärte (A) von 56 gegeben. Hierzu wurden unter Rühren 65 Teile einer wässrigen Dispersion (Feststoffgehalt 37 Gew%) eines aliphatischen anionischen Polyurethans mit einer Shorehärte (A) von 72 gegeben. Hierzu wurden unter Rühren 55 Teile einer wässrigen Dispersion (Feststoffgehalt 67 Gew%) eines vorvernetzten Silicon-Kautschuks gegeben. Das Gemisch wurde für 15 Minuten gerührt.

### Beispiel I.5.: Dispersionsmischung für die Polymerschicht (C)

Bei Raumtemperatur wurden 120 Teile Wasser vorgelegt. Hierzu wurden unter ständigem Rühren 467 Teile einer wässrigen Dispersion (Feststoffgehalt 27 Gew%) eines anionischen aliphatischen Polyurethans die 2% Siliciumdioxid als Mattierungsmittel enthielt, gegeben. Hierzu wurden unter Rühren 375 Teile einer wässrigen Dispersion (Feststoffgehalt 37 Gew%) eines aliphatischen anionischen Polyurethans mit Mindestfilmtemperatur von 23°C gegeben. Hierzu wurden unter Rühren 38 Teile einer wässrigen Dispersion (Feststoffgehalt 67 Gew%) eines vorvernetzten Silicon-Kautschuks gegeben. Das Gemisch wurde für 15 Minuten gerührt.

### Beispiel II. Herstellung einer Matrize

Ein flüssiges Silikon wurde auf eine Unterlage gegossen, die das Muster eines vollnarbigen Kalbsleders aufwies. Man ließ aushärten, indem man eine Lösung von Di-n-butylbis(1-oxoneodecyloxy)stannan als 25 Gew.-% Lösung in Tetraethoxysilan als sauren Härter dazu gab, und erhielt eine im Mittel 2 mm starke Silikonkautschukschicht, die als Matrize diente. Die Matrize wurde auf einen 1,5 mm dicken Aluminiumträger aufgeklebt.

### Beispiel III. Bereitstellung von Formulierungen zur Applikation

Für Beispiele III.1 bis III.10 wurden die Polymermischungen aus Beispielen I.1 bis I.5 gemäß Tabelle 1 vorgelegt und mit 2 Gew% einer Pigmentformulierung enthaltend Pigment Black 7 und nichtionische Tenside (2 Gew% bezogen auf die eingesetzte Polymerdispersion) hinzugefügt. Hierzu wurde eine die in Tabelle 1 angegebene Menge einer Lösung eines anionischen Polyisocyanats auf der Basis von 1,6-Hexamethylendiisocyanat (angegebener Prozentsatz bezogen auf die eingesetzte Polymerdispersion), gegeben, das mit 3,5-Dimethylpyrazol blockiert war (Feststoffgehalt der Lösung 40%, NCO-Gehalt des freien Polyisocyanats bezogen auf die eingesetzte Lösung 4,8%). Die Mischung wurde für 15 Minuten bei Raumtemperatur gerührt.

**Tabelle 1: Zusammensetzung eingesetzter Polymerdispersionen zur Applikation von Polymer- und Verbindungsschichten**

| Nr. | III.1 | III.2 | III.3 | III.4 | III.5 | III.6 | III.7 | III.8 | III.9 | III.10 |
|---|---|---|---|---|---|---|---|---|---|---|
| Polymerdispersion | I.1 | I.2 | I.3 | I.4 | I.5 | I.1 | I.2 | I.3 | I.4 | I.5 |
| Eingesetzte Menge Polyisocyanat [Gew%, bezogen auf die eingesetzte Polymerdispersion] | 4 | 5 | 5 | 5 | 5 | 2 | 2,5 | 2,5 | 2,5 | 2,5 |

### Weiterhin wurden folgenden Vergleichsversuche durchgeführt:

Für Beispiele III.11 und III.12 wurden die Polymermischungen aus Beispielen I.1 und I.2 gemäß Tabelle 2 vorgelegt und mit 2 Gew% einer Pigmentformulierung enthaltend Pigment Black 7 und nichtionische Tenside (2 Gew% bezogen auf die eingesetzte Polymerdispersion) hinzugefügt. Hierzu wurde die in Tabelle 2 angegebene Menge einer Lösung eines anionischen Polyisocyanats auf der Basis von 1,6-Hexamethylendiisocyanat (angegebener Prozentsatz bezogen auf die eingesetzte Polymerdispersion), gegeben, nicht blockiert war (Feststoffgehalt der Lösung 40%, NCO-Gehalt 4.8%). Die Mischung wurde für 15 Minuten bei Raumtemperatur gerührt.

**Tabelle 2: Zusammensetzung eingesetzter Polymerdispersionen als Vergleichsbeispiele zur Applikation von Polymer- und Verbindungsschichten**

| Nr. | III.11 | III.12 |
|---|---|---|
| Polymerdispersion | I.1 | I.2 |
| Eingesetzte Menge Polyisocyanat [Gew%, bezogen auf die eingesetzte Polymerdispersion] | 4 | 5 |

### IV. Herstellung von erfindungsgemäßen mehrschichtigen Verbundmaterialien

Die Matrize aus Beispiel II. wurde auf eine beheizbare Unterlage gelegt und auf 91°C erwärmt. Anschließend wurde durch eine Sprühdüse eine wässrige Polymerdispersion gemäß Tabelle 3 aufgesprüht, und zwar 100 g/m² (nass). Das Auftragen erfolgte ohne Luftbeimengung mit einer Sprühdüse, die einen Durchmesser von 0,46 mm besaß, bei einem Druck von 65 bar. Man ließ bei 105°C verfestigen.

Die Sprühdüse war in einer Höhe von 20 cm von der durchlaufenden Unterlage in Bewegungsrichtung derselben mobil angeordnet und bewegte sich quer zu der Bewegungsrichtung der Unterlage. Die Unterlage hatte nach etwa 14 Sekunden die Sprühdüse passiert und besaß eine Temperatur von 59°C. Nach einer etwa zweiminütigen Beaufschlagung mit trockener, 85°C warmer Luft war der so hergestellte, netzartig aussehende Polyurethanfilm (C.1) nahezu wasserfrei.

In einer analogen Anordnung wurde unmittelbar im Anschluss auf die so beschichtete Matrize 50 g/m² nass von einer Polymerdispersion gemäß Tabelle 1 als Verbindungsschicht (B.1) aufgetragen und anschließend bei 105 °C trocknen gelassen.

Man erhielt eine mit Polyurethanfilm (C.1) und Verbindungsschicht (B.1) beschichtete Matrize.

Ein Trägermaterial gemäß Tabelle 2 wurde ebenfalls mit 50 g/m² nass derselben Polymerdispersion (B) als Verbindungsschicht (B.2) besprüht. Man ließ das so besprühte Polyestergewebe mehrere Minuten bei Raumtemperatur antrocknen. Man erhielt ein mit Verbindungsschicht (B.2) beschichtetes Trägermaterial.

Die Matrize mit Polymerschicht und Verbindungsschicht und die jeweiligen Träger mit einer Verbindungsschicht wurden anschließend durch eine Anlage (z.B. Kaschieranlage) wie folgt (Tabelle) beschichtet: Die Matrize mit Polymerschicht und Verbindungsschicht und die jeweiligen Träger wurden in drei Zonen von je 2 Meter Länge mit 140 °C, 160°C und 170°C nacheinander aufgeheizt und anschließend mit einem Anpressdruck von 6 N/cm² und einem Spalt von 6,5 mm laminiert. Anschließend wurden die Muster bei einer Rückkühltemperatur von 30 °C mit einer Geschwindigkeit von 5 m/min durch eine Kühlstrecke von 2 Meter Länge gefahren.

**Tabelle 3: Hergestellte erfindungsgemäße Verbundmaterialien IV.1 bis IV.16 und Vergleichsbeispiele IV.17 bis IV.18**

| Versuch Nr. | Träger | Verbindungsschicht (B) | Polymerschicht (C) |
|---|---|---|---|
| IV.1 | A.1 | III.1 | III.2 |
| IV.2 | A.1 | III.1 | III.3 |
| IV.3 | A.1 | III.1 | III.4 |
| IV.4 | A.1 | III.1 | III.5 |
| IV.5 | A.1 | III.6 | III.7 |
| IV.6 | A.1 | III.6 | III.8 |
| IV.7 | A.1 | III.6 | III.9 |
| IV.8 | A.1 | III.6 | III.10 |
| IV.9 | A.2 | III.1 | III.2 |
| IV.10 | A.2 | III.1 | III.3 |
| IV.11 | A.2 | III.1 | III.4 |
| IV.12 | A.2 | III.1 | III.5 |
| IV.13 | A.2 | III.6 | III.7 |
| IV.14 | A.2 | III.6 | III.8 |
| IV.15 | A.2 | III.6 | III.9 |
| IV.16 | A.2 | III.6 | III.10 |
| IV.17 | A1 | III.11 | III.12 |
| IV.18 | A2 | III.11 | III.12 |

### V. Anwendungstechnische Prüfung der gemäß Beispiel IV hergestellten Verbundmaterialien.

Die gemäß Versuche IV.1 bis IV.16 hergestellten Verbundmaterialien wurden folgenden Prüfungen unterzogen:
1. Abriebtest
   Veslic Abriebtester (Veslic = Verein Schweizerischer Lederindustriechemiker)
   gemäß ISO 11640 und DIN 61200
   Gewicht 500 g
      a.) mit Filz , nass - Medienflüssigkeit Wasser - 500 Zyklen
      b.) mit Filz, trocken, 2000 Zyklen
2. Flexometerprüfung (Bally Flex)
   gemäß DIN EN ISO 5402, DIN 53351
   100.000 Zyklen
3. Martindale (Scheuerfestigkeit)
   in Anlehnung DIN EN ISO 12947-1
   mit einem Gewicht von 12 kPa
   20.000 + 50.000 Zyklen
4. Hydrolyse Prüfung
   gemäß DIN 53504
   (95% Raumfeuchtigkeit, 70°C, 500 h)
   anschl. Martindale 50.000 Zyklen
5. Heißlichtalterung
   gemäß ISO 105-B06
   3-fach - 210 h
   anschl. 30.000 Zyklen
6. Stapeltest
   Prüfgerät wie nach DIN EN ISO 15701 (Migrationsechtheit)

Nach den Prüfungen wurden die Prüflinge bewertet:

| Note: 1 | Note: 2 | Note: 3 | Note: 4 | Note: 5 |
|---|---|---|---|---|
| Oberfläche komplett zerstört Träger liegt frei | Oberfläche zu 50% zerstört, Träger zu sehen | Oberfläche mit leichter Beschädigung teilweise ist der Träger zu sehen | Oberfläche ohne Beschädigung, mit Gebrauchsspuren | Oberfläche ohne Beschädigung und ohne Gebrauchsspuren |

Die Ergebnisse sind in Tabelle 4 wieder gegeben.

**Tabelle 4: Prüfungsergebnisse von Verbundmaterialien IV.1 bis IV.16 und von Vergleichsbeispielen IV.17 und IV.18: 1. Abriebtest nach Veslic (a: nass, b: trocken); 2. Flexometerprüfung (Bally); 3. Scheuerfestigkeit nach Martindale; 4. Hydrolyseprüfung nach DIN 53504; 5. Heißlichtalterung nach ISO 105-B06; 6. Stapeltest gemäß DIN ISO 11641**

| Matrize - V -Nr.: | Träger | 1. | | 2. | 3. | | 4. | 5. | 6. |
|---|---|---|---|---|---|---|---|---|---|
| | | nass | trocken | | 20.000 | 50.000 | | | |
| IV.1 | A.1 | 4 | 4 - 5 | 4 - 5 | 4 - 5 | 4 | 4 | 4 | 4 - 5 |
| IV.2 | A.1 | 4 | 4 - 5 | 4 - 5 | 4 - 5 | 4 | 4 | 4 | 4 - 5 |
| IV.3 | A.1 | 4 | 4 - 5 | 4 - 5 | 4 - 5 | 4 | 4 | 4 | 4 - 5 |
| IV.4 | A.1 | 4 | 4 - 5 | 4 - 5 | 4 - 5 | 4 | 4 | 4 | 4 - 5 |
| IV.5 | A.1 | 4 | 4 - 5 | 4 - 5 | 4 - 5 | 4 | 4 | 4 | 4 - 5 |
| IV.6 | A.1 | 4 | 4 - 5 | 4 - 5 | 4 - 5 | 4 | 4 | 4 | 4 - 5 |
| IV.7 | A.1 | 4 | 4 - 5 | 4 - 5 | 4 - 5 | 4 | 4 | 4 | 4 - 5 |
| IV.8 | A.1 | 4 | 4 - 5 | 4 - 5 | 4 - 5 | 4 | 4 | 4 | 4 - 5 |
| IV.9 | A.2 | 4 | 4 - 5 | 4 - 5 | 4 - 5 | 4 | 4 | 4 | 4 - 5 |
| IV.10 | A.2 | 4 | 4 - 5 | 4 - 5 | 4 - 5 | 4 | 4 | 4 | 4 - 5 |
| IV.11 | A.2 | 4 | 4 - 5 | 4 - 5 | 4 - 5 | 4 | 4 | 4 | 4 - 5 |
| IV.12 | A.2 | 4 | 4 - 5 | 4 - 5 | 4 - 5 | 4 | 4 | 4 | 4 - 5 |
| IV.13 | A.2 | 4 | 4 - 5 | 4 - 5 | 4 - 5 | 4 | 4 | 4 | 4 - 5 |
| IV.14 | A.2 | 4 | 4 - 5 | 4 - 5 | 4 - 5 | 4 | 4 | 4 | 4 - 5 |
| IV.15 | A.2 | 4 | 4 - 5 | 4 - 5 | 4 - 5 | 4 | 4 | 4 | 4 - 5 |
| IV.16 | A.2 | 4 | 4 - 5 | 4 - 5 | 4 - 5 | 4 | 4 | 4 | 4 - 5 |
| IV.17 | A.1 | 2 | 3 | 4 - 5 | 3 - 4 | 3 | 3 | 3 | Klebt zusammen, nicht zu trennen |
| IV.18 | A.2 | 2 | 3 | 4 - 5 | 3 - 4 | 3 | 3 | 3 | Klebt zusammen, nicht zu trennen |

## Patentansprüche

1. Verfahren zur Herstellung von mehrschichtigen Verbundmaterialien umfassend als Komponenten:
(A) ein Trägermaterial
(B) gegebenenfalls mindestens eine Verbindungsschicht und
(C) eine Polymerschicht,
**dadurch gekennzeichnet, dass** man
a) mit Hilfe einer Matrize eine Polymerschicht (C) bildet,
b) gegebenenfalls mindestens einen organischen Klebstoff vollflächig oder partiell auf Trägermaterial (A) und/oder auf Polymerschicht (C) aufbringt und dann
c) Polymerschicht (C) mit Trägermaterial (A) punktförmig, streifenartig oder flächig verbindet,
wobei Polymerschicht (C) und/oder die gegebenenfalls mindestens eine Verbindungsschicht (B) aus wässrigen Polymerdispersionen hergestellt werden, die mindestens einen Vernetzer V enthalten, wobei der mindestens eine Vernetzer V mindestens ein Polyisocyanat P ist, dessen isocyanatgruppen mit mindestens einem Blockierungsmittel BM blockiert sind, wobei das mindestens eine Blockierungsmittel BM ausgewählt ist aus Malonsäureestern, Acetoacetaten, Oximen, Pyrazolen, Lactamen und Phenolen.

2. Verfahren nach Anspruch 1, wobei es sich bei Polymerschicht (C) um eine Schicht aus Polyurethan, Polyvinylacetat oder deren Mischungen handelt.

3. Verfahren nach mindestens einem der vorstehenden Ansprüche, wobei es sich bei Polymerschicht (C) um eine Polyurethanschicht handelt.

4. Verfahren nach mindestens einem der vorstehenden Ansprüche, **dadurch gekennzeichnet, dass** die Polyurethanschicht (C) Kapillaren aufweist, die über die gesamte Dicke der Polyurethanschicht (C) gehen.

5. Verfahren nach mindestens einem der vorstehenden Ansprüche, **dadurch gekennzeichnet, dass** es sich bei Trägermaterialien (A) um Leder, Textilien, Non-Woven, Kunstleder, Schaumstoffe, cellulosehaltige Materialien, Stein, Metallfolien, Kunststofffolien handelt.

6. Verfahren nach mindestens einem der vorstehenden Ansprüche, **dadurch gekennzeichnet, dass** die Polyurethanschicht (C) eine Musterung aufweist.

7. Verfahren nach mindestens einem der vorstehenden Ansprüche, **dadurch gekennzeichnet, dass** die Polyurethanschicht (C) eine samtartige Erscheinung aufweist.

8. Verfahren nach mindestens einem der vorstehenden Ansprüche, **dadurch gekennzeichnet, dass** es sich bei der Verbindungsschicht (B) um eine durchbrochene Schicht eines gehärteten organischen Klebstoffs handelt.

9. Verfahren nach mindestens einem der vorstehenden Ansprüche, **dadurch gekennzeichnet, dass** man Polyurethanschicht (C) mit Hilfe einer Silikonmatrize oder einer Matrize aus EPM oder EPDM bildet.

10. Verfahren nach mindestens einem der vorstehenden Ansprüche, **dadurch gekennzeichnet, dass** es sich bei der Silikonmatrize um eine mit Hilfe von Lasergravur strukturierte Silikonmatrize handelt.

11. Verfahren nach mindestens einem der vorstehenden Ansprüche, **dadurch gekennzeichnet, dass** man zur Strukturierung der Matrize mit Hilfe eines Lasers Näpfchen in die Matrize einarbeitet, die eine mittlere Tiefe im Bereich von 50 bis 250 µm aufweisen und einen Mittenabstand im Bereich von 50 bis 250 µm.

12. Mehrschichtiges Verbundmaterial, erhältlich durch Verfahren gemäß Ansprüchen 1 bis 11.

## Claims

1. Process for the preparation of multilayered composite materials comprising, as components:
(A) a backing material,
(B) optionally at least one tie layer and
(C) a polymer layer,
**characterized in that**
a) a polymer layer (C) is formed using a mold,
b) optionally at least one organic adhesive is applied all over or partially to backing material (A) and/or to polymer layer (C) and then
c) polymer layer (C) is bonded with backing material (A) in point, strip or two-dimensional fashion,
polymer layer (C) and/or the optionally at least one tie layer (B) being prepared from aqueous polymer dispersions which comprise at least one crosslinking agent C, the at least one crosslinking agent C being at least one polyisocyanate P, the isocyanate groups of which are blocked with at least one blocking agent BA, the at least one blocking agent BA being chosen from malonic esters, acetoacetates, oximes, pyrazoles, lactams and phenols.

2. Process according to Claim 1, wherein polymer layer (C) is a layer of polyurethane, polyvinyl acetate or the mixtures thereof.

3. Process according to at least one of the preceding claims, wherein polymer layer (C) is a polyurethane layer.

4. Process according to at least one of the preceding claims, **characterized in that** the polyurethane layer (C) exhibits capillaries which extend over the entire thickness of the polyurethane layer (C).

5. Process according to at least one of the preceding claims, **characterized in that** the backing materials (A) are leather, textiles, nonwovens, artificial leather, foams, cellulose materials, stone, metal films and plastic films.

6. Process according to at least one of the preceding claims, **characterized in that** the polyurethane layer (C) exhibits a pattern.

7. Process according to at least one of the preceding claims, **characterized in that** the polyurethane layer (C) exhibits a velvety appearance.

8. Process according to at least one of the preceding claims, **characterized in that** the tie layer (B) is an open-work layer of a cured organic adhesive.

9. Process according to at least one of the preceding claims, **characterized in that** polyurethane layer (C) is formed using a silicone mold or a mold made of EPM or EPDM.

10. Process according to at least one of the preceding claims, **characterized in that** the silicone mold is a silicone mold structured using laser engraving.

11. Process according to at least one of the preceding claims, **characterized in that** wells are incorporated in the mold in the structuring of the mold using a laser, which wells exhibit an average depth in the range from 50 to 250 µm and a center-to-center separation in the range from 50 to 250 µm.

12. Multilayered composite material which can be obtained through processes according to Claims 1 to 11.

## Revendications

1. Procédé de fabrication de matériaux composites multicouches, comprenant en tant que composants :
(A) un matériau support,
(B) éventuellement au moins une couche de liaison et
(C) une couche de polymère,
**caractérisé en ce que**
a) une couche de polymère (C) est formée à l'aide d'une matrice,
b) au moins un adhésif organique est éventuellement appliqué sur l'ensemble de la surface ou sur une partie du matériau support (A) et/ou de la couche de polymère (C), puis
c) la couche de polymère (C) est reliée avec le matériau support (A) de manière ponctuelle, par bandes ou à plat,
la couche de polymère (C) et/ou ladite au moins une couche de liaison éventuelle (B) étant fabriquées à partir de dispersions aqueuses de polymères, qui contiennent au moins un agent de réticulation V, ledit au moins un agent de réticulation V étant au moins un polyisocyanate P, dont les groupes isocyanate sont bloqués avec au moins un agent bloquant BM, ledit au moins un agent bloquant BM étant choisi parmi les esters de l'acide malonique, les acétoacétates, les oximes, les pyrazoles, les lactames et les phénols.

2. Procédé selon la revendication 1, dans lequel la couche de polymère (C) consiste en une couche de polyuréthane, de polyacétate de vinyle ou leurs mélanges.

3. Procédé selon au moins l'une quelconque des revendications précédentes, dans lequel la couche de polymère (C) consiste en une couche de polyuréthane.

4. Procédé selon au moins l'une quelconque des revendications précédentes, **caractérisé en ce que** la couche de polyuréthane (C) comprend des capillaires qui passent sur l'épaisseur totale de la couche de polyuréthane (C).

5. Procédé selon au moins l'une quelconque des revendications précédentes, **caractérisé en ce que** les matériaux supports (A) consistent en du cuir, des textiles, des non-tissés, du cuir artificiel, des mousses, des matériaux cellulosiques, de la pierre, des films métalliques, des films en matière plastique.

6. Procédé selon au moins l'une quelconque des revendications précédentes, **caractérisé en ce que** la couche de polyuréthane (C) présente un motif.

7. Procédé selon au moins l'une quelconque des revendications précédentes, **caractérisé en ce que** la couche de polyuréthane (C) présente une apparence veloutée.

8. Procédé selon au moins l'une quelconque des revendications précédentes, **caractérisé en ce que** la couche de liaison (B) consiste en une couche fragmentée d'un adhésif organique durci.

9. Procédé selon au moins l'une quelconque des revendications précédentes, **caractérisé en ce que** la couche de polyuréthane (C) est formée à l'aide d'une matrice de silicone ou d'une matrice en EPM ou EPDM.

10. Procédé selon au moins l'une quelconque des revendications précédentes, **caractérisé en ce que** la matrice de silicone consiste en une matrice de silicone structurée à l'aide d'une gravure laser.

11. Procédé selon au moins l'une quelconque des revendications précédentes, **caractérisé en ce que**, pour la structuration de la matrice, des cuvettes sont incorporées dans la matrice à l'aide d'un laser, qui présentent une profondeur moyenne dans la plage allant de 50 à 250 µm et un écart moyen dans la plage allant de 50 à 250 µm.

12. Matériau composite multicouche, pouvant être obtenu par un procédé selon les revendications 1 à 11.
